# EUROPEAN PATENT SPECIFICATION

(11) **EP 2 990 091 B1**
(45) Date of publication and mention of the grant of the patent: **23.05.2018**
(21) Application number: 14787605.6
(22) Date of filing: 23.04.2014
(51) Int. Cl.: C01B 32/50, F23J 15/04, B01D 53/62, B01D 53/34, B01D 53/14

(54) **DEVICE FOR RECOVERING AND METHOD FOR RECOVERING CARBON DIOXIDE**
VORRICHTUNG ZUR RÜCKGEWINNUNG UND VERFAHREN ZUR RÜCKGEWINNUNG VON KOHLENDIOXID
DISPOSITIF ET PROCÉDÉ DE RÉCUPÉRATION DE DIOXYDE DE CARBONE

(30) Priority: 26.04.2013 JP 2013093387
(43) Date of publication of application: 02.03.2016
(73) Proprietor: IHI Corporation, Tokyo 135-8710 (JP)
(72) Inventor: OKUNO, Shinya, Tokyo 135-8710 (JP); MURAMOTO, Tomoya, Tokyo 135-8710 (JP); NISHIYAMA, Yuichi, Tokyo 135-8710 (JP); UENO, Shunichiro, Tokyo 135-8710 (JP); NAKAMURA, Shiko, Tokyo 135-8710 (JP)
(74) Representative: Lamb, Martin John Carstairs
(86) International application number: PCT/JP2014/061445
(87) International publication number: WO 2014/175338

(56) References cited:
- GB-A- 1 501 195
- JP-A- 2010 235 395
- JP-A- 2011 213 494
- JP-A- 2012 000 538
- JP-A- 2012 110 835
- JP-A- 2012 110 835
- US-A- 4 367 258

## Description

### Technical Field

The present invention relates to a recovery method and a recovery apparatus of carbon dioxide for separating and recovering carbon dioxide from a gas containing carbon dioxide such as a combustion gas, and for returning a clean gas to an atmosphere.

### Background Art

A large amount of fuel such as coal, heavy oil, and extra heavy oil is used in facilities such as thermal power stations, ironworks and boilers. In regard to sulfur oxide, nitrogen oxide and carbon dioxide discharged by burning of the fuel, quantitative/concentration restriction on emissions has been required from the viewpoint of prevention of air pollution and global environmental protection. In recent years, carbon dioxide has been regarded as a problem as is a major contributor to global warming, and moves to suppress carbon dioxide emissions have been active worldwide. Therefore, various kinds of research have been vigorously conducted in order to enable recovery/storage of carbon dioxide from a combustion exhaust gas or a process exhaust gas instead of emitting carbon dioxide in the air. For example, a PSA (pressure swing adsorption) method, a membrane separation concentration method, and a chemical absorption technique using reaction absorption with a basic compound have been known as a method of recovering carbon dioxide.

In the chemical absorption technique, a basic compound that typically belongs to alkanolamines is mainly used as an absorbent, and the absorbing liquid is circulated in the treatment process thereof, generally, with use of an aqueous solution containing the absorbent as the absorbing liquid, by alternately repeating an absorbing step of causing the absorbing liquid to absorb carbon dioxide contained in the gas and a regenerating step of regenerating the absorbing liquid by causing the absorbing liquid to release the absorbed carbon dioxide (see, for example, Patent Literature 1 described below). Heating for the release of carbon dioxide is needed in the regenerating step, and it becomes important to reduce energy required for heating/cooling for the regeneration, in order to reduce the operation cost of carbon dioxide recovery. As shown in Patent Literature 1, a high-temperature absorbing liquid from which carbon dioxide has been discharged (lean liquid) in the regenerating step is subjected to heat exchange with an absorbing liquid in which carbon dioxide has been absorbed (rich liquid) in the absorbing step. In this way, thermal energy is possibly recovered to reuse in the regenerating step.

In order to reduce the energy necessary for the recovery of the carbon dioxide from the absorbing liquid, according to Patent Literature 2 listed below, the following is used for heating the absorbing liquid: residual heat of steam-condensed water generated from a regenerating heater for pulling out the absorbing liquid in the regenerating step and then subjecting the absorbing liquid to heat exchange with high-temperature steam. Furthermore, Patent Literature 3 listed below states that, in order to promote the discharge of absorbed carbon dioxide, a stripping gas is introduced to be accompanied with carbon dioxide. Moreover, Patent Literature 4 listed below states that two regeneration towers in each of which the absorbing liquid is heated to a high temperature or a low temperature are used and the absorbing liquid regenerated at the low temperature is supplied to a middle stage of an absorber, thereby reducing energy required for heating.

Further, in order to recover the thermal energy from a gas discharged from the regenerating step, Patent Literature 5 below discloses a configuration, with the use of a compressor to compress a gas containing carbon dioxide discharged from the regeneration tower and a heat exchanger to exchange heat with the gas sent from the compressor, in which the absorbing liquid of a regeneration tower is supplied to the heat exchanger so as to heat the absorbing liquid by heat exchange with the gas and is then returned to the regeneration tower.

Further, a treatment process for a combustion exhaust gas or a process exhaust gas in order to reduce the energy necessary when carbon dioxide is recovered from the absorbing liquid is disclosed in Patent Literature 6 or Patent Literature 7 below discloses. Reference is also made to JP 2012-110835 A which discloses a system and method for recovering gas which contains CO₂ and H₂S.

### Citation List

### Patent Literature

Patent Literature 1: JP 2009-214089 A
Patent Literature 2: JP 2005-254212 A
Patent Literature 3: JP 2005-230808 A
Patent Literature 4: JP 2011-57485 A
Patent Literature 5: JP 2010-235395 A
Patent Literature 6: JP 2012-538 A
Patent Literature 7: JP 2008-307520 A

### Summary of Invention

### Technical Problem

The energy necessary for the regeneration of the absorbing liquid includes sensible heat necessary for a rise in the temperature of the absorbing liquid, reaction heat generated when the carbon dioxide is discharged from the absorbing liquid, and latent heat used to compensate for the thermal loss caused by the vaporization of water from the absorbing liquid. In the above-described related arts, these kinds of heat are recovered. However, there still remains a room for improvement in order to efficiently recover and reuse the energy involved with the latent heat.

In order to spread the recovering of carbon dioxide for environment preservation, it is desired from an economical viewpoint to make the energy efficiency as high as possible to reduce costs for the recovery. It is important for energy saving to heighten the efficiency of recovering thermal energy from an absorbing liquid. This can also act effectively onto the efficiency of recovering carbon dioxide.

An object of the present invention is to solve the above-mentioned problems to provide a recovery method and a recovery apparatus of carbon dioxide, capable of reducing the energy necessary for regenerating the absorbing liquid and reducing the operation cost.

Further, an object of the present invention is to provide a recovery method and a recovery apparatus of carbon dioxide, capable of recovering carbon dioxide at low cost by reducing the energy necessary for the regeneration of the absorbing liquid without degrading the carbon dioxide recovery ratio while the burdens onto the apparatus and the absorbing liquid is reduced and the durability of the facility and the treatment stability are improved.

Further, an object of the present invention is to provide a carbon dioxide recovery apparatus having a structure which is applicable to an already-existing carbon dioxide recovery apparatus to realize improvement in the energy efficiency for regenerating the absorbing liquid.

### Technical Solution

In order to solve the above-described problems, the inventors have repeated eager researches to find out that utilization of the construction in which each of the absorbing step and the regenerating step are divided into at least two stages is advantageous for reducing the amount of steam contained in the recovered carbon dioxide in order to performing sufficient thermal energy recovery for the latent heat, and that the process conditions can be effectively adjusted and managed by circulation of the absorbing liquid using the partially branched and merged circulation system. Thus the present invention which is highly applicable and adaptable has been achieved on the ground mentioned above.

According to one aspect of the invention, a subject matter of the carbon dioxide recovery apparatus resides in comprising: an absorber which brings a gas into contact with an absorbing liquid and to allow the absorbing liquid to absorb carbon dioxide contained in the gas, the absorber having a first absorbing section and a second absorbing section which are partitioned and arranged to supply the gas through the first absorbing section into the second absorbing section; a regenerator which regenerates the absorbing liquid by heating the absorbing liquid having carbon dioxide absorbed in the absorber to cause the absorbing liquid to release the carbon dioxide, the regenerator having a first regenerating section having an external heating implement and a second regenerating section being partitioned from the first regenerating section and arranged to be heated by heat from gas discharged from the first regenerating section; a circulation mechanism comprising a circulation system having a supply path for supply from the second absorbing section to the first regenerating section and a return path for return from the first regenerating section to the second absorbing section to circulate the absorbing liquid between the second absorbing section and the first regenerating section, and a branch flow system branched from the supply path of the circulation system to cause a part of the absorbing liquid circulated in the circulation system to flow from the second absorbing section through the first absorbing section and the second regenerating section successively and be joined with the rest of the absorbing liquid to be supplied to the first regenerating section; a cooler which cools the part of the absorbing liquid to be supplied into the first absorbing section in the branch flow system; a compressor which directly compresses a recovery gas discharged from the regenerator and containing carbon dioxide and steam; and a heat recovery system which recovers heat of the recovery gas compressed by the compressor and supplies the heat to the regenerator.

Further, according to one aspect of the invention, a subject matter of the carbon dioxide recovery method resides in comprising: an absorption treatment of bringing a gas into contact with an absorbing liquid to cause carbon dioxide contained in the gas to be absorbed into the absorbing liquid, the absorption treatment having a first absorbing step and a second absorbing step, and the gas being supplied to the second absorbing step through the first absorbing step; a regeneration treatment of heating the absorbing liquid in which carbon dioxide is absorbed in the absorption treatment to discharge the carbon dioxide, thereby regenerating the absorbing liquid, the regeneration treatment having a first regenerating step and a second regenerating step, the absorbing liquid being heated in the first regenerating step with use of an external heating implement, and the absorbing liquid being heated in the second regenerating step with use of heat of the gas discharged in the first regenerating step; a circulation treatment comprising a circulating step of circulating the absorbing liquid between the second absorbing step and the first regenerating step, and a branch flow step of causing a part of the absorbing liquid circulated in the circulating step to flow, as a branch flow, from the second absorbing step through the first absorbing step and the second regenerating step successively and be directed then to the first regenerating step; a cooling treatment of cooling the absorbing liquid of the branch flow to be supplied to the first absorbing step from the second absorbing step in the branch flow step; a compression step of directly compressing a recovery gas being discharged from the regeneration treatment and containing carbon dioxide and steam; and a heat recovery step of recovering heat of the recovery gas compressed by the compression step and supplying the heat to the regeneration treatment.

### Advantageous Effects of Invention

According to the present invention, since it is possible to improve the efficiency of recovering and reusing the heat used to regenerate the absorbing liquid in the process of recovering the carbon dioxide contained in the gas and to reduce the thermal energy necessary for the regeneration without degrading the carbon dioxide recovery ratio, it is possible to provide a recovery method and a recovery apparatus of carbon dioxide, capable of reducing operation cost. Since a single absorbing liquid is circulated in a process having multiple stages of absorption and regeneration with different conditions, it is possible to easily detect and adjust the concentration variation of the absorbing liquid in circulation and to easily handle a change of the condition setting in response to a change in the gas to be treated. Accordingly, the energy efficiency is high, and the absorbing liquid is stably used with the setting and changing of the process conditions. Further, requirements for the durability of the apparatus and the structure materials are possibly mitigated, and the operation cost and the maintenance cost are effectively reduced. Since the present invention can easily be performed using ordinary facilities without requiring special equipment or expensive apparatus. The invention can also be carried out in the state that a constituent element is added to an already-existing facility. Thus, the invention is advantageous in economy.

### Brief Description of the Drawings

Fig. 1 is a schematic configuration diagram showing a first embodiment of the carbon dioxide recovery apparatus according to the present invention.
Fig. 2 is a schematic configuration diagram showing a second embodiment of the carbon dioxide recovery apparatus according to the present invention.
Fig. 3 is a schematic configuration diagram showing a third embodiment of the carbon dioxide recovery apparatus according to the present invention.
Fig. 4 is a schematic configuration diagram showing a fourth embodiment of the carbon dioxide recovery apparatus according to the present invention.
Fig. 5 is a schematic configuration diagram showing a fifth embodiment of the carbon dioxide recovery apparatus according to the present invention.

### Description of Embodiments

In an absorption process of carbon dioxide according to the chemical absorption method, an absorption treatment in which an absorbing liquid at low temperature is caused to absorb carbon dioxide contained in a gas and a regeneration treatment in which the absorbing liquid is regenerated by causing the absorbing liquid to release the absorbed carbon dioxide are alternately repeated by circulating the absorbing liquid between the absorption treatment and the regeneration treatment. The regeneration degree of the absorbing liquid in the regeneration treatment depends on the heating temperature of the absorbing liquid. As the temperature is higher, the absorbing liquid discharges a larger volume of carbon dioxide so that the remaining carbon dioxide concentration in the absorbing liquid becomes lower (see: Jong I. Lee, Federick D. Otto and Alan E. Mather, "Equilibrium Between Carbon Dioxide and Aqueous Monoethanolamine Solutions", J. appl. Chem. Biotechnol. 1976, 26, pp. 541-549). Thus, the absorbing liquid in the regeneration treatment is generally kept at a temperature near to the boiling point thereof by an external heating implement using thermal energy supplied from an external heat source. The absorbing liquid from which carbon dioxide has been discharged (lean liquid) in the regeneration treatment, which is high in temperature, is subjected to heat exchange with the absorbing liquid in which carbon dioxide has been absorbed (rich liquid) in the absorption treatment, and the heated rich liquid is supplied to the regeneration treatment. Thus, thermal energy is recovered and reused. However, carbon-dioxide-containing gas discharged from the absorbing liquid in the regeneration treatment is discharged in a high-temperature state that the gas contains the heat. Thus the heat quantity contained in the discharged gas is wasted. The temperature of the discharged gas, that is, the top temperature of the regenerator can be made low by lowering the heat exchange ratio between the rich liquid and the lean liquid. However, it does not contribute to a reduction in the heat quantity because sensible heat recovered in the heat exchange is reduced.

In connection with this point, if each of the absorption treatment and the regeneration treatment is divided into two stages, so as to constitute two groups of an absorbing step and a regenerating step, and if the absorbing liquid is circulated by means of two circulation paths separating from each other, the top temperature of the regenerator can be made low without lowering the heat exchange effectiveness and such a structure makes it possible that heat quantity contained in the discharged gas is reduced while the heat recovered by the heat exchange can be used to regenerate the absorbing liquid. Specifically, a semi-rich liquid that has undergone the absorption treatment at an upper region of the absorber is positively heated by use of an external energy source at a lower region of the regenerator, so as to regenerate the semi-rich liquid sufficiently into a rich liquid, and then the rich liquid is caused to flow back to the upper region of the absorber. The liquid caused to undergo an absorption treatment at a lower part of the absorber, that is a rich liquid resultantly absorbing sufficient carbon dioxide, is heated at an upper region of the regenerator, using heat emitted and recovered from the gas, so as to regenerate the rich liquid to a semi-lean liquid. The semi-lean liquid is caused to flow back to the lower region of the absorber. Heat exchange is then made between the respective circulating absorbing liquid in each of the groups. According to this structure, carbon dioxide is effectively collected with reuse of thermal energy, and the top temperature of the regenerator is possibly lowered.

However, in the above-described configuration, a difference in concentration easily occurs between the absorbing liquids of two circulation paths due to the steam that is evaporated from the absorbing liquid of one circulation path and moves to the absorbing liquid of the other circulation path. As a countermeasure to solve this problem, a circulation mechanism may be employed in which one of two circulation paths is formed as a branch path branched from the other circulation passage and is joined thereto. That is, two circulation paths are partially combined with each other, and the concentration variation of the absorbing liquid caused in the branched paths is canceled by joining to each other.

In the present invention, as described above, a single absorbing liquid is circulated by using the circulation system including the branch path which is branched from and joined with the circulation path circulating in one pair of the absorbing step and the regenerating step while dividing the flow so as to flow through the other pair of the absorbing step and the regenerating step. And, based on this configuration, the thermal energy contained in the recovery gas discharged from the regenerator is recovered and reused. Accordingly, it is possible to provide a recovery method and a recovery apparatus of carbon dioxide that the thermal energy use efficiency is improved by suppressing and recovering the waste heat and that have a configuration in which management of the absorbing liquid is easy. In this configuration, it is possible to easily adjust the temperature appropriately, and it is advantageous to reduce the regeneration energy necessary for the recovery of carbon dioxide and to improve the carbon dioxide recovery efficiency. Further, since it is possible to suppress the corrosion of components or sealing members constituting the apparatus due to the recovery gas discharged from the regenerator, it is very advantageous also to recover and reuse the moisture and the thermal energy.

Hereinafter, a detailed description will be made about the carbon dioxide recovery method and the carbon dioxide recovery apparatus of the present invention with reference to the drawings.

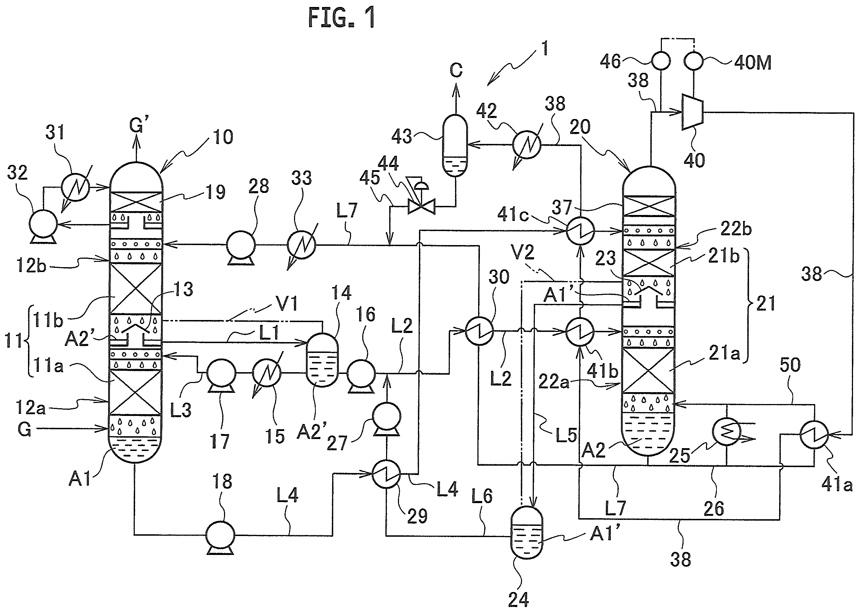

Fig. 1 illustrates one embodiment of the carbon dioxide recovery apparatus of the present invention. A recovery apparatus 1 has an absorber 10 which is configured to bring a gas G containing carbon dioxide into contact with an absorbing liquid to cause carbon dioxide to be absorbed into the absorbing liquid, and a regenerator 20 which is configured to heat the absorbing liquid having the carbon dioxide absorbed therein, so as to discharge the carbon dioxide from the absorbing liquid and regenerate the absorbing liquid. The gas G which is supplied to the recovery apparatus 1 is not particularly limited and thus, various carbon-dioxide-containing gases, such as combustion exhaust gas and process exhaust gas, can be handed. The absorber 10 and the regenerator 20 are respectively configured as a column-shaped gas-liquid contact equipment of a countercurrent type, and are respectively charged with fillers 11 and 21 so as to increase their contact areas. As the absorbing liquid, an aqueous liquid which contains, as the absorbent, a compound having affinity with carbon dioxide such as alkanolamines or the like is used. The fillers 11 and 21 are made of a material having durability and corrosion resistance at the treatment temperature and may be appropriately selected for use, respectively, from fillers having a shape capable of providing a desired contact area. In general, fillers made of an iron-based metal material such as stainless steel and carbon steel may be used for these fillers 11 and 12, but the fillers are not particularly limited thereto. Further, if necessary, a cooling column may be provided for maintaining the gas G to be supplied to the absorber 10 at a low temperature suitable for the absorption of carbon dioxide.

The gas G containing carbon dioxide is supplied through a lower portion of the absorber 10. The inside of the absorber 10 is partitioned into a first absorbing section 12a located at the lower side in which a filler 11a is held and a second absorbing section 12b located at the upper side in which a filler 11b and is held, and a partitioning member 13 in which a tubular wall is uprightly formed on the circumferential edge of a center hole of a horizontal annular plate is interposed between the first absorbing section 12a and the second absorbing section 12b. The partition member 13 is formed so that a lamp-shade-like member covers over an upper end hole of the tubular wall and a liquid reservoir is formed on the horizontal annular plate between the inner wall of the absorber 10 and the tubular wall of the partitioning member 13. The gas G which is supplied through the lower portion of the absorber 10 rises inside the column to pass through the filler 11a in the first absorbing section 12a, and then passes through the filler 11b of the second absorbing section 12b through the inner bore of the tubular wall of the partitioning member 13.

On the other hand, the absorbing liquid is supplied through an upper portion of the second absorbing section 12b of the absorber 10 to flow downward through the filler 11b, and it is configured so that the absorbing liquid is then stored in the liquid reservoir of the partitioning member 13, which is derived to the outside of the column through a path L1 and is stored in a tank 14, without flowing down to the first absorbing section. This route for the absorbing liquid is branched at the tank 14, so that a path L2 at one side connects the tank 14 to the center portion of the regenerator 20 and a path L3 at the other side connects the tank 14 to the center portion of the absorber 10. Accordingly, the absorbing liquid of the tank 14 is divided into two parts, and one part of the absorbing liquid is supplied to the regenerator 20 through the path L2 by a pump 16, while the other part of the absorbing liquid is supplied to the upper portion of the first absorbing section 12a of the absorber 10 through a path L3 by a pump 17 and then flows down through the filler 11a to be stored in the bottom portion of the absorber 10. In order to eliminate a fluctuation in the pressure inside the tank 14, a ventilation pipe V1 which communicates with the second absorbing section is connected to the top of the tank 14 (as indicated by the two-dotted chain line of the drawing), and the path L3 is provided with a cooler 15 which cools the absorbing liquid, and a pump 17.

While the gas G passes through the fillers 11a and 11b, the gas G is brought into gas-liquid contact with the absorbing liquid sequentially, so that carbon dioxide in the gas G is absorbed into the absorbing liquid. Since the carbon dioxide concentration of the gas after passing through the first absorbing section 12a has decreased, the absorbing liquid which is supplied to the second absorbing section 12b contacts the gas having a carbon dioxide concentration lower than the gas G. Absorbing liquid A2' which has absorbed carbon dioxide in the second absorbing section 12b and has been stored in the liquid reservoir of the partition member 13 is a semi-rich liquid. Here, a part of it is supplied from the tank 14 to the regenerator 20 through the path L2, and the rest of it flows from the tank 14, as a branch flow, and is supplied to the first absorbing section 12a through the cooler 15 so as to become a rich liquid while further absorbing carbon dioxide and being stored in the bottom portion of the absorber 10. The absorbing liquid (the rich liquid) A1 of the bottom portion of the absorber 10 is supplied by a pump 18 to the regenerator 20 through a path L4 which connects the bottom portion of the absorber 10 to the upper portion of the regenerator 20. Gas G' from which carbon dioxide has been removed is discharged from the top of the absorber 10.

When the absorbing liquid absorbs carbon dioxide, heat is generated so that the temperature of the liquid is raised. Thus, as the need arises, a cooling condenser section 19 is provided at the top of the absorber 10 to condense water vapor and others contained in the gas G'. This section enables to restrain the water vapor and the others to some degree from leaking outside the column. In order to further ensure the restraint, the recovery apparatus has a cooler 31 and a pump 32 located outside the absorber. A part of condensed water stored under the cooling condenser section 19 (the condensed water part being permissible to contain the gas G' in the column) is circulated between the cooling condenser section 19 and the cooler 31 by means of the pump 32. The condensed water and others that have been cooled by the cooler 31 to be supplied to the column top portion cause the cooling condenser section 19 to be kept at a low temperature, and causes the gas G' passing through the cooling condenser section 19 to be certainly cooled. The driving of the pump 32 is controlled in such a manner that the temperature of the gas G' discharged outside the column is preferably about 60°C or lower, more preferably 45°C or lower. In the configuration in Fig. 1, water condensed in the cooling condenser section 19 is supplied to the filler 11b. Since the condensed water is usable to correct a fluctuation in the composition of the absorbing liquid in the columns, it is thus allowable, as the need arises, that the concentration composition of the absorbing liquid is detected and the condensed water is supplied to the filler 11a and filler 11b in accordance with the ratio of the fluctuations in the concentration.

The inside of the regenerator 20 is partitioned into a first regenerating section 22a located at the lower side in which a filler 21a is held, and a second regenerating section 22b located at the upper side in which a filler 21b is held. Between the first regenerating section 22a and the second regenerating section 22b, a partitioning member 23 which has the same structure as the partition member 13 to form a liquid reservoir is interposed. The absorbing liquid A1 which is supplied from the bottom portion of the absorber 10 through the path L4 is introduced to the upper portion of the second regenerating section 22b of the regenerator 20 to flow down through the filler 21b, and is then stored in the liquid reservoir of the partitioning member 23 that is configured in such a manner that the absorbing liquid is discharged to the outside of the column through a path L5 and is stored in the tank 24, without flowing down to the first regenerating section 22a. The absorbing liquid A2' which is supplied from the second absorbing section 12b of the absorber 10 through the paths L1 and L2 is supplied to the upper portion of the first regenerating section 22a to flow down through the filler 21a, and it is then stored in the bottom portion of the regenerator 20.

The bottom portion of the regenerator 20 is provided with a reboiler as an external heating implement for positively heating the absorbing liquid by using energy supplied from the outside. Specifically, a steam heater 25 located outside the regenerator 20 and a circulation path 26 which circulates the absorbing liquid A2 stored in the bottom portion of the column through the steam heater 25 are provided. Then a part of the absorbing liquid A2 of the bottom portion of the column is divided by the circulation path 26 to flow and be supplied to the steam heater 25, and it is continuously heated by heat exchange with high-temperature steam to flow back to the column. In this manner, the absorbing liquid A2 of the bottom portion is positively heated by the external heating implement so as to sufficiently discharge the carbon dioxide, and the filler 21a is also heated indirectly to promote the discharge of carbon dioxide due to gas-liquid contact on the filler 21a. A high-temperature gas which contains carbon dioxide and water vapor discharged from the absorbing liquid rises to passes through the filler 21a in the first regenerating section 22a, and then it passes through the filler 21b in the second regenerating section 22b through an inner hole of a tubular wall of the partitioning member 23. In the meantime, the absorbing liquid A2' flowing down through the filler 21a and the absorbing liquid A1 flowing down through the filler 21b are heated so that carbon dioxide in the absorbing liquids A1 and A2' is discharged. Since the absorbing liquid A1 which is supplied to the second regenerating section 22b does not receive any positive heating by the external heating implement but is heated only by the heat of the gas discharged from the first regenerating section 22a, the temperature of the absorbing liquid A1' in the liquid reservoir of the partitioning member 23 is lower than that of the absorbing liquid A2. Consequently, the regeneration degree of the absorbing liquid A1' becomes lower than the regeneration degree of the absorbing liquid A2 of the column bottom portion, so as to obtain a semi-lean liquid. The absorbing liquid A1' from which carbon dioxide has been discharged in the second regenerating section 22b flows down from the liquid reservoir of the partitioning member 23 to the tank 24 through the path L5. The bottom portion of the tank 24 is connected to the path L2 by a path L6, and the absorbing liquid A1' inside the tank 24 is supplied to the path L2 by a pump 27 provided on the path L6 so as to be merged with the absorbing liquid A2' supplied from the tank 14. In order to eliminate the pressure fluctuation inside the tank 24, a ventilation pipe V2 which communicates with the second regenerating section 22b is connected to the top of the tank 24 (as indicated by the two-dotted chain line of the drawing).

The absorbing liquid A2 (the lean liquid) stored in the bottom portion of the regenerator 20, from which carbon dioxide has been sufficiently emitted is caused to flow back by a pump 28 recirculated to the upper portion of the second absorbing section 12b of the absorber 10 through a path L7 which connects the upper portion of the absorber 10 to the bottom portion of the regenerator 20. As a result, a circulation system is formed in which the absorbing liquid A2 or A2' goes and comes back between the second absorbing section 12b and the first regenerating section 22a through the paths L1, L2, and L7. Moreover, a branch flow system is provided in which a part of the absorbing liquid A2' of the circulation system is divided by the paths L3 to L6 as a branch flow and sequentially passes through the first absorbing section 12a and the second regenerating section 22b as the absorbing liquid A1 or A1' to be joined with the absorbing liquid A2' in the circulation system. In other words, the paths L1, L2, and L7 form a circulation path between the second absorbing section and the first regenerating section, and the paths L3 to L6 form a branch path which are branched from the circulation path to flow from the second absorbing section 12b and pass through the first absorbing section 12a and the second regenerating section 22b, and which is connected again to the circulation system before reaching the first regenerating section 22a. A gas which contains the carbon dioxide discharged from the absorbing liquid in the regenerator 20 is discharged as a recovery gas C from the top of the regenerator 20.

The absorbing liquid A1', from which carbon dioxide has been discharged in the second regenerating section 22b passes through the first heat exchanger 29 while flowing through the paths L5 and L6, so that heat exchange is performed between the absorbing liquid A1 of the path L4 and the absorbing liquid A1' of the path L6 in the first heat exchanger 29. Accordingly, the absorbing liquid A1' is cooled by the absorbing liquid A1 of the path L4, and it is joined with the absorbing liquid A2' of the path L2. Moreover, the absorbing liquid A2 from which carbon dioxide has been discharged in the first regenerating section 22a passes through a second heat exchanger 30 while flowing through the path L7, and heat exchange is performed between the absorbing liquid A2 of the path L7 and the absorbing liquid (A1' + A2') of the path L2 in the second heat exchanger 30. Accordingly, the absorbing liquid A2 is cooled by the absorbing liquid (A1' + A2') of the path L2, and is further cooled sufficiently by a cooler 33 using cooling water, which is thereafter introduced to the upper portion of the second absorbing section 12b. Heat exchangers can be classified into various types such as a spiral type, a plate type, a double tube type, a multiple cylinder type, a multiple circular tube type, a spiral tube type, a spiral plate type, a tank coil type, a tank jacket type, and a direct contacting liquid type. In the present invention, any type may be used as the heat exchanger between the absorbing liquids, but plate type exchangers are excellent from the viewpoint of the simplification of the apparatus and easiness of the disassembly and cleaning thereof.

The recovery gas C which contains the carbon dioxide discharged from the absorbing liquid by the heating of the regenerator 20 passes through the condenser section 37 provided in the upper portion of the regenerator 20 for suppressing the discharge of the steam and the absorbent, and it is then discharged from the top through an exhaust pipe 38. In the present invention, a heat recovery system configured by means of a compressor and a heat exchanger is provided for recovering heat of the recovery gas C discharged from the regenerator 20 and reusing the heat in the regenerator 20. In order to improve the heat recovery efficiency, the recovery gas C which is discharged from the regenerator 20 is directly compressed without subjecting to condensation and separation of water vapor by the cooling process. Both the compression heat of gas generated by the above compression and the condensation heat of the water are reused while being collected together and recovered by the heat exchanger. The heat recovery and supply process is performed by means of the heat exchanger which exchanges heat between the compressed recovery gas C and the absorbing liquid introduced into the regenerator 20. In the embodiment of Fig. 1, the heat recovery and supply process is performed at three positions by using three heat exchanges, but may be performed at one or two positions by omitting one or two exchangers.

Specifically, the recovery apparatus 1 has a compressor 40 which is provided on the exhaust pipe 38 so as to directly communicate with the regenerator 20, a circulation path 50 by which a part of the absorbing liquid A2 of the bottom portion of the regenerator 20 is divided to flow so as to be circulated with respect to the outside of the regenerator, and heat exchangers 41a, 41b, and 41c which are provided on the exhaust pipe 38 so as to exchange heat between the recovery gas C compressed by the compressor 40 and the absorbing liquid to be introduced to the regenerator 20, and the recovery gas C which is compressed by the compressor 40 passes through the heat exchanger 41a, the heat exchanger 41b, and the heat exchanger 41c in order. The heat exchanger 41a is provided on the circulation path 50 and exchanges heat between the recovery gas C and the absorbing liquid A2 of the circulation path 50. The heat exchanger 41b is arranged between the second heat exchanger 30 of the path L2 and the first regenerating section 22a and exchanges heat between the recovery gas C and the absorbing liquid (A1' + A2'). The heat exchanger 41c is arranged between the first heat exchanger 29 of the path L4 and the second regenerating section 22b and exchanges heat between the recovery gas C and the absorbing liquid A1. The temperature of the recovery gas C decreases for each passing of the recovery gas passes through the heat exchangers, and the water vapor contained in the recovery gas C is cooled and condensed so that the condensation heat is discharged. Accordingly, the condensation heat of the water is also recovered along with the compression heat in the heat exchangers 41a to 41c, and the heat is supplied to the absorbing liquid. In order to exchange heat between the recovery gas C and the absorbing liquid, various heat exchangers generally used for a gas-liquid heat exchange process may be appropriately selected for use. For example, a direct contact type heat exchanger, a finned tube type heat exchanger, and a plate type heat exchanger may be exemplified. The regenerator 20 of the present invention is configured to have two stages of the regenerating section. Accordingly, since the temperature of the top of the regenerator 20 is lower than that of one-stage-type regenerator, it is possible to sufficiently prevent the absorbent from being discharged to the outside of the column in the condenser section 37, and this is a very appropriate configuration from the viewpoint of preventing the corrosion of the compressor 40. The absorbing liquid A2 of the circulation path 50 which is heated by the heat exchanger 41a returns to the bottom portion of the regenerator 20, the absorbing liquid (A1' + A2') of the path L2 which is heated by the heat exchanger 41b is introduced into the upper portion of the first regenerating section 22a, and the absorbing liquid A1 of the path L4 which is heated by the heat exchanger 41c is introduced into the upper portion of the second regenerating section 22b. Accordingly, in any case, the heat which is recovered by the recovery gas C is supplied to the regenerator 20. In the embodiment, the absorbing liquid A2 after exchanging heat in the heat exchanger 41a returns directly to the regenerator 20, but it is noted here that the circulation path 50 may be connected in such a manner that the absorbing liquid returns through the steam heater 25.

The recovery gas C of the exhaust pipe 38 after subjected to the heat recovery of the heat recovery system is sufficiently cooled by a cooler 42 using cooling water so that the water vapor is condensed as much as possible, and the condensed water is then removed by a gas-liquid separator 43, thereafter the recovery gas is recovered. When the carbon dioxide of the recovery gas C is injected into, for example, a ground or an oil well, the carbon dioxide gas is possibly fixed under a ground and be reorganized. The pressure of the recovery gas C which is compressed by the compressor 40 may be effectively used, for example, as a working pressure such as an injection pressure in the processing of the recovered carbon dioxide.

The bottom portion of the gas-liquid separator 43 is connected to the downstream side of the second heat exchanger 30 of the path L7 by a water supply path 45, and a pressure reducing valve 44 is provided on the water supply path 45 as a pressure reduction device for releasing the applied pressure. The condensed water which is separated by the gas-liquid separator 43 is adjusted to have a pressure appropriate for the introduction to the absorber 10 by the pressure reducing valve 44, and is added from the water supply path 45 to the absorbing liquid A2 of the path L7. The absorbing liquid A2 of the path L7 returns to the upper portion of the second absorbing section 12b of the absorber 10 after being cooled by the cooler 33. That is, the condensed water which is generated from the recovery gas C is used to adjust the compositional variation of the absorbing liquid A2 to be supplied to the absorber 10. As the pressure reducing valve 44, for example, a valve generally used as a pressure adjusting valve or a back pressure valve may be used.

A pressure meter 46 is connected to the exhaust pipe 38 so as to detect the pressure inside the regenerator 20, and an output of a motor 40M of the compressor 40 is controlled in response to the detected pressure value. Accordingly, the operation of the compressor 40 is adjusted so that the pressure inside the regenerator 20 is maintained constant (the connection indicated by the one-dotted chain line of the drawing indicates the electric connection). When an output control using, for example, an inverter is used for the control of the motor 40M, the energy efficiency is high.

In the above-described embodiment, such a change is also possible that the pressure of the condensed water may be released and adjusted by using an expander instead of the pressure reducing valve 44. In this case, when a heat pump is provided in which the expander and the compressor 40 are driven cooperatively with a coaxial rotor, the operation efficiency is improved. Alternatively, the energy efficiency may be improved by configuring so that the flowing condensed water is depressurized by an ejector, or that the flow pressure of the pressurized condensed water is recovered as power energy by a turbine or the like and used to drive the compressor. Further, in the above-described embodiment, improvement to increase the heat recovery amount caused by the heat exchange is also possible by the change to use a plurality of compressors arranged in series as the compressor 40. Alternatively, when the compressors are provided in the exhaust pipe 38 so as to be located between the heat exchanger 41a and the heat exchanger 41b and to be located between the heat exchanger 41b and the heat exchanger 41c so that compression and heat exchange are repeated alternately on the recovery gas C after passing the heat exchanger 41a, the compression heat recovery efficiency is high. In addition, if a plurality of gas-liquid separators are arranged so as to separate the condensed water from the recovery gas C in each time when heat is recovered by the heat exchanger, it is preferable in view of the compression efficiency. Further, if necessary, each of the heat exchangers may be changed into a plurality of heat exchangers arranged to repeat the heat exchange process in multiple stages, or the exhaust pipe 38 and the circulation path 50 (or the paths L2 and L4) may be respectively divided into parallel paths between each of which the heat exchange process is performed by arranging a plurality of heat exchangers.

In the regenerator 20, an expression of T1 > T2 is satisfied in which T1 represents the temperature of the absorbing liquid A2 heated on the bottom of the first regenerating section 22a, and T2 represents the temperature of the absorbing liquid (A1' + A2') introduced from the second heat exchanger 30 into the upper portion of the first regenerating section 22a. Expressions of t1 > T3 > T4 and t1 > t2 are also satisfied in which T3 represents the temperature of the absorbing liquid A1' in the liquid reservoir that has been heated in the second regenerating section 22b by the gas discharged from the first regenerating section 22a, T4 represents the temperature of the absorbing liquid A1 introduced from the first heat exchanger 29 into the second regenerating section 22b, t1 represents the temperature of the gas discharged from the first regenerating section 22a into the second regenerating section 22b, and t2 represents the temperature of the gas discharged from the second regenerating section 22b. In general, the absorbing liquid in the regenerator is heated to a temperature close to the boiling point of the absorbing liquid in order to heighten the regeneration degree thereof. When a heat exchanger being high in heat exchanging performance is used to heighten the recovery ratio of heat to make the temperature difference (T1 - T2) small, the temperature t1 of the gas discharged from the first regenerating section 22a also becomes high. If the gas is discharged from the regenerator 20 as it is, a large quantity of energy corresponding to the latent heat is also discharged together with water vapor, as well as the energy corresponding to the sensible heat. In the present invention, the heat quantity of the gas discharged from the first regenerating section 22a is recovered in the second regenerating section 22b to be used for the regeneration of the absorbing liquid, so that the temperature of the gas is lowered from t1 to t2 to reduce the quantity of the sensible heat discharged to the outside. Following the lowering in the gas temperature, the condensation of water vapor also advances, so that the water vapor and latent heat contained in the gas discharged from the second regenerating section 22b are also decreased. In the above-mentioned structure, condensed water from water vapor vaporized from the absorbing liquid is, in the absorber 10, supplied to the absorbing liquid A2' in the second absorbing section 12b, while the condensed water is supplied, in the regenerator 20, to the absorbing liquid A1' in the second regenerating section 22b. Accordingly, in the circulation system, even when the quantity of vapor vaporized from absorbing liquid A2 in the first regenerating section 22a exceeds the quantity of condensed water supplemented in the second absorbing section 12b, the quantity of the condensed water is added to a part of the absorbing liquid in the second regenerating section 22b while the branched part flows in the branch path and is joined again with the main flow. Therefore, the concentration variation of the absorbing liquid is reduced. Further, since the amount of the condensed water increases when the heat is recovered from the recovery gas C by using the compressor 40 and the heat exchangers 41a to 41c, the amount of water vapor and the amount of latent heat discharged from the regenerator 20 decrease. Further, since the temperature of the condensed water of the gas-liquid separator 43 decreases when the pressure is released by the pressure reducing valve 44, the condensed water is suitable for adding to the absorbing liquid A2 returning to the absorber 10, and hence the cooling heat amount necessary in the cooler 33 may be effectively decreased.

A recovery method which is performed by the operation of the recovery apparatus 1 of Fig. 1 will be described.

When the gas G containing carbon dioxide such as a combustion exhaust gas or a process exhaust gas is supplied from the bottom portion of the absorber 10 and the pumps 16 to 18, 27, and 28 are driven so as to supply the absorbing liquids A2', A2 through the upper portions of the first and second absorbing sections 12a and 12b, a gas-liquid contact occurs between the gas G and the absorbing liquids A2' and A2 on the fillers 11a and 11b, and an absorption treatment comprising a first absorbing step in the first absorbing section 12a and a second absorbing step in the second absorbing section 12b is performed so that the carbon dioxide is absorbed to the absorbing liquids A2' and A2. Since the carbon dioxide is satisfactorily absorbed at a low temperature, the temperature of the absorber 10 (particularly, the fillers 11a and 11b) or the liquid temperature of the absorbing liquids A2' and A2 are substantially adjusted to generally about 50°C or less, preferably about 40°C or less. Since the absorbing liquid generates heat by the absorption of the carbon dioxide, it is desirable that the liquid temperature do not exceed 60°C in consideration of the increase in liquid temperature by the heat generation. If necessary, the gas G which is supplied to the absorber 10 may also be adjusted to an appropriate temperature in advance by using the cooling column in consideration of the above-described circumstance. For the absorbing liquid, an aqueous liquid which contains a compound having affinity with carbon dioxide as absorbent is used. For the absorbent, alkanolamines, hindered amines having an alcoholic hydroxyl group, and the like can be exemplified. Specifically, as the alkanolamines, for example, monoethanolamine, diethanolamine, triethanolamine, N-methyldiethanolamine (MDEA), diisopropanolamine, diglycolamine, and the like may be exemplified. As the hindered amines having an alcoholic hydroxyl group, 2-amino-2-methyl-1-propanol (AMP), 2-(ethylamino)ethanol (EAE), 2-(methylamino)ethanol (MAE), 2-(isopropylamino)ethanol (IPAE), and the like may be exemplified. It is allowed to combine two or more kinds of the compounds as mentioned above to use in a mixture form. A cyclic amine may be used to be added/incorporated thereto, examples thereof including piperidine, piperazine, pyridine, pyrimidine, pyrazine, 3-methylpyridine, 2-methylpyrazine, 2-(methylamino)piperidine (2AMPD), 2-methylpiperazine, 2-(aminomethyl)piperazine, 2,6-dimethylpiperazine, 2,5-dimethylpiperazine, and 2-(β-hydroxyethyl)piperazine. Monoethanolamine (MEA), which is in general favorably used, is an absorbent which is high in absorbing performance, while AMP or MDEA is an absorbent good in regeneration property. In order to improve AMP or MDEA in absorbing performance, an absorbing liquid is frequently prepared by blending MEA thereinto. In accordance with the blend ratio, the absorbing performance and the regeneration property can be adjusted to some degree and it is useful for reducing the regeneration energy. The absorbent concentration in the absorbing liquid may be appropriately set in accordance with the quantity of carbon dioxide contained in the gas which is a target to be treated, and the treating speed, the fluidity of the absorbing liquid, a consumption loss restraint thereof, and others. The absorbent is generally used in a concentration of about 10 to 50% by mass. For treatment of the gas G in which the content by percentage of carbon dioxide is, for example, about 20%, an absorbing liquid having the concentration of about 30% by mass is favorably used.

The supplying rate of the gas G and the circulating rates of the absorbing liquid are appropriately set, respectively, so that the absorption is advanced satisfactorily, in consideration of the amount of carbon dioxide contained in the gas G, the carbon dioxide absorption capacity of the absorbing liquid, the gas-liquid contact efficiency in the filler, and others. By circulating the absorbing liquid through each path, an absorption treatment and a regeneration treatment are repeatedly performed.

The regeneration treatment for the absorbing liquid in the regenerator 20 has a first regenerating step of heating the absorbing liquid by the external heating in the first regenerating section 22a, and a second regenerating step of heating the absorbing liquid in the second regenerating section 22b by use of heat of a gas discharged from the first regenerating step. A part of the absorbing liquid A2' (the semi-rich liquid) which has absorbed carbon dioxide in the second absorbing step is supplied from the tank 14 through the path L2 to the first regenerating step in the first regenerating section 22a. The other part of absorbing liquid As' flows from the tank 14 through the paths L3 and L4 so as to undergo the first absorbing step in the first absorbing section 12a and the second regenerating step in the second regenerating section 22b. It is then, as the half regenerated absorbing liquid A1' (the semi-lean liquid), joined with the absorbing liquid A2' of the path L2 through the paths L5 and L6, so as to be directed to the first regenerating section 22a. Before the absorbing liquid A1' of the path L5 is joined with the absorbing liquid A2' of the path L2, the absorbing liquid A1' of the path L5 is subjected, in the first heat exchange step using the first heat exchanger 29, to heat exchange with the absorbing liquid A1 of the path L4 to be supplied to the second regenerating step. The absorbing liquid (A2' + A1') which is obtained by the connection between the path L2 and the path L6 is heated in the second heat exchange step using the second heat exchanger 30, by heat exchange with the absorbing liquid A2 flowing back after the first regenerating step in the regenerator 20, before it is supplied to the first regenerating step in the first regenerating section 22a.

Although the temperature T1 of the absorbing liquid A2 which is heated by the external heat in the first regenerating step of the first regenerating section 22a is varied in accordance with the composition of the used absorbing liquid and regeneration conditions, the temperature T1 is generally set to the range of about 100 to 130°C (the vicinity of the boiling point). On the basis of this temperature range, the temperature of the absorbing liquid (A2' + A1') after the second heat exchange step is about 90 to 125°C, and the introduction temperature T2 to the first regenerating section 22a can be set to the range of about 95 to 125°C by the heat exchanger 41b. The temperature t1 of the recovery gas C which is discharged from the first regenerating section 22a to the second regenerating section 22b is about 90 to 120°C. Further, the temperature T3 of the absorbing liquid A1' which has been heated in the second regenerating section 22b by the gas discharged from the first regenerating section 22a turns into the range of about 85 to 120°C. This absorbing liquid A1', before being merged with the absorbing liquid A2' of the path L2 from the tank 24, is cooled in the first heat exchange step, by heat exchange in the first heat exchanger 29 with the absorbing liquid A1 to be supplied from the absorber 10 to the regenerator 20. On the other hand, the temperature of the absorbing liquid A1 increases to the range of about 80 to 110°C, and the temperature T4 of the absorbing liquid A1 introduced into the second regenerating section 22b can be set to the range of about 85 to 115°C by the heating in the heat exchanger 41c. The temperature t2 of the recovery gas C which is discharged from the second regenerating section 22b is possibly lowered to the range of about 65 to 100°C.

The flow rate of the absorbing liquid flowing through the path before the flow is divided and the path after the flows are joined (for example, the flow rate of the absorbing liquid A2 of the path L7), in the circulating step of circulating the absorbing liquid in the circulation system formed by the paths L1, L2, and L7, is represented by S, and the flow rate of the absorbing liquid after the flow is divided in the branch flow step, that is, the flow rate of the absorbing liquid A1 or A1' flowing through the paths L3 to L6 of the branch flow system is represented by ΔS. Under this promise, the ratio: ΔS/S, which is the ratio of the flow rate ΔS to the flow rate S, is appropriately set as about 1/10 to 9/10 in consideration of the carbon dioxide content in the gas G and the absorbing performance and regeneration property of the absorbing liquid, and others. It is preferable that the ratio be set to 4/10 to 8/10, from the view point of the heat recovery and the regeneration efficiency in the second regenerating section 22b. Such a designing is appropriate that the ratio ΔS/S may be substantially equal to the ratio of the filled volume of the filler 11a of the first absorbing section 12a with respect to the filled volume of the filler 11 in the absorber 10, and that it may be substantially equal to the ratio of the filled volume of the filler 21b of the second regenerating section 22b with respect to the filled volume of the filler 21 in the regenerator 20. A difference in carbon dioxide content between the absorbing liquid A2' (the semi-rich liquid) supplied from the tank 14 to the first regenerating section 22a and the absorbing liquid A1' (the semi-lean liquid) to be merged into the path L2 from the tank 24 also changes by the setting of the ratio ΔS/S of the flow rates. It is preferable that the difference be small from the viewpoint of the regeneration efficiency of the absorbing liquid. The flow rates S and ΔS can be adjusted by the control of the driving of the pumps 16 to 18, 27 and 28. At this time, appropriate values of the flow rates in a normal state can be set by detecting the liquid surface levels of the tanks 14 and 24 and taking a driving balance between the pumps in accordance with respective fluctuations in these levels. Therefore, in the case where the pump driving conditions for circulating the absorbing liquid at an appropriate flow rates are given in advance, the tanks 14 and 24 may be omitted.

The regeneration is performed in the second regenerating section 22b at a temperature lower than the first regenerating section 22a, thereby the temperature (≒ the temperature t2 of the recovery gas C) of the upper portion of the regenerator 20 is possibly decreased to a temperature close to the temperature T4 of the input absorbing liquid A1 (t2 < t1, T4 < T3 < t1). Accordingly, the absorbent which is contained in the recovery gas C passing through the condenser section 37 decreases, and hence the corrosion caused by the absorbent in the device provided in the exhaust pipe 38 is prevented. For allowing the regeneration of the absorbing liquid to proceed at a low temperature, it is important to ensure a large amount of carbon dioxide in the absorbing liquid. In this regard, since the carbon dioxide content easily increases in the absorbing liquid A1, in comparison, which contacts the gas having a high carbon dioxide concentration in the first absorbing section 12a, this absorbing liquid is appropriately regenerated by using the waste heat of the gas in the second regenerating section 22b.

The absorbing liquid A2 which is stored in the bottom portion of the regenerator 20 is heated to the vicinity of the boiling point by the partial circulation heating process. At this time, the boiling point of the absorbing liquid is dependent on the composition (the absorbent concentration) and the pressure inside the regenerator 20. The latent heat of the evaporation of water which is lost from the absorbing liquid and the sensible heat of the absorbing liquid are necessarily supplied in the heating. Then, if the evaporation is suppressed by the pressurization, the sensible heat increases by an increase in boiling point. Accordingly, in consideration of the balance between them, it is preferred on energy efficiency to use such a condition setting that the inside of the regenerator 20 is pressurized at about 100 kPaG and the absorbing liquid is heated to 120 to 130°C. Since operation of the compressor 40 has the effect to decrease the internal pressure of the regenerator 20, pressurizing of the inside of the regenerator 20 may be made appropriately by controlling the exhaust from the exhaust pipe 38 with use of an opening/closing valve or the like to increase the pressure inside the column, before operating the compressor 40, and by controlling then the operation of the compressor 40 while the internal pressure of the regenerator 20 and the outlet pressure of the compressor 40 may be adjusted.

In the regenerator 20, the recovery gas C containing the carbon dioxide discharged from the absorbing liquid is directly compressed by the compressor 40, and the gas temperature increases with an increase in pressure, so that the heat is easily recovered by the heat exchange. In the heat recovery step on the heat exchanger 41a, the water vapor contained in the recovery gas C is condensed, and the condensation heat of the water is also discharged. In order to efficiently recover the heat, the compression ratio of the compressor 40 is appropriately adjusted so that the temperature of the compressed gas becomes about 120 to 500°C and preferably becomes a temperature about 5°C higher than the boiling point of the absorbing liquid. Although the setting may be different in accordance with the amount of the water vapor contained in the recovery gas C, it is preferable in general to set the compression ratio so that the pressure of the recovery gas C becomes about 0.3 to 2.0 MPaG by the compression step. If the compression step is performed in multiple stages by using a plurality of compressors, a high pressure is needed at the subsequent stage. For this reason, for example, when the compression is performed in three stages, the pressure at the first compression stage may be set to about 0.3 to 1.0 MPaG, the pressure at the second compression stage may be set to about 0.5 to 1.5 MPaG, and the pressure at the third compression stage may be set to about 1.0 to 2.0 MPaG.

The compression heat generated by the compression and the condensation heat of the water are recovered by a part of the absorbing liquid A2 circulated from the regenerator 20 in the heat exchange treatment in the heat exchanger 41a, and this absorbing liquid flows back to the bottom portion of the regenerator 20, so that the recovery heat is supplied to the absorbing liquid of the regenerator 20. Accordingly, it is possible to reduce the thermal energy of the steam heater 25 that is necessary for the heating of the absorbing liquid A2 of the regenerator 20. The remaining heat of the recovery gas C after passing through the heat exchanger 41a is sequentially recovered by the heat exchange with the absorbing liquid (A1' + A2') of the path L2 and the absorbing liquid A1 of the path L4 in the heat exchangers 41b and 41c, and the absorbing liquids of the paths L2 and L4 are introduced into the first regenerating section 22a and the second regenerating section 22b, thereby the recovery heat is supplied to the regenerator 20. The temperature of the recovery gas C flowing through the exhaust pipe 38 decreases at every time the recovery gas passes through the heat exchangers 41a to 41c. Accordingly, the temperature at the outlet of the heat exchanger 41a becomes about 100 to 140°C, the temperature at the outlet of the heat exchanger 41b becomes about 80 to 130°C, and the temperature at the outlet of the heat exchanger 41c becomes about 70 to 120°C.

When the water which is condensed from the recovery gas C after the above-described heat recovery step is subjected to the separation step of the gas-liquid separator 43, the pressure thereof is released by the pressure reducing valve 44. The water is then added to the absorbing liquid A2 flowing through the path L7, and flows back to the second absorbing section 12b of the absorber 10. Since the temperature of the condensed water of the gas-liquid separator 43 is about 40 to 50°C and the water temperature further decreases due to the evaporation during the pressure reduction of the pressure reducing valve 44, the water is conveniently introduced into the absorber 10, and hence the cooling energy of the cooler 33 is effectively decreased. In addition, the water supply path 45 may be branched so as to supply a part of the condensed water of the gas-liquid separator 43 to the other portion, and the degree of freedom increases in adjustment of the concentration of the absorbing liquid.

In this way, the absorbing liquid is circulated between the second absorbing section 12b of the absorber 10 and the first regenerating section 22a of the regenerator 20, while a part of the absorbing liquid passes through the first absorbing section 12a and the second regenerating section 22b in the branch flow system so that the carbon dioxide absorbed at a higher concentration is discharged at a lower temperature. As a result, since the heat is used in the second regenerating section 22b that regenerates the absorbing liquid at a temperature lower than the first regenerating section 22a, the energy efficiency of the regenerator is improved. That is, a circulation system in which absorption and regeneration are mainly performed on the absorbing liquid is formed in the circulation path formed by the paths L1, L2, and L7, and a branch flow system which recovers and reuses the thermal energy of the regenerator and which also reduces effectively the absorption load given to the absorbing liquid from the gas G having a high carbon dioxide concentration is formed in the branch flow pass formed by the passages L3 to L6. Further, since the pressure applied to the recovery gas C by the compressor 40 during the heat recovery from the recovery gas C is released to cool the condensed water generated from the recovery gas C, the condensed water which is added to adjust the concentration of the absorbing liquid returning to the absorber 10 may be conveniently used to adjust the temperature. Accordingly, in the configuration of the apparatus of Fig. 1, the utilization efficiency for the thermal energy in the regenerator is improved by the recovery and the reuse of the thermal energy, and hence the processing adaptability of the recovery apparatus may be effectively improved.

In order to evaluate the heat recovery effect of three heat exchangers 41a to 41c in the embodiment of Fig. 1, the regeneration energy (the energy amount necessary to recover the carbon dioxide) in the case where the recovery of the heat from the recovery gas C is performed using none, one, two or three of three heat exchangers 41a to 41c is examined by the calculation using a process simulator. Then, the ratio with respect to the regeneration energy (about 2.8 GJ/t-CO₂) in the basic structure (the process using the absorber and the regenerator of single type) is obtained. That ratio, which is expressed in percentage, is as shown in Table 1 below. Here, in this calculation, a process is assumed to recover the carbon dioxide at the recovery ratio of 90% from the carbon-dioxide-containing gas, by setting the ratio ΔS/S described above to 5/10 and setting the heat exchange performance (the temperature difference between the outlet temperature of the low-temperature fluid and the inlet temperature of the high-temperature fluid in a countercurrent heat exchange) ΔT of the first and second heat exchangers 29 and 30 and the heat exchangers 41a to 41c to 10°[K].

**(Table 1)**

| Code of heat exchanger used | Ratio of regeneration energy |
|---|---|
| - | 85.8 % |
| 41a | 74.4 % |
| 41b | 78.0 % |
| 41c | 81.9 % |
| 41a + 41b | 72.3 % |
| 41a + 41c | 65.8 % |
| 41b + 41c | 74.2 % |
| 41a + 41b + 41c | 65.3 % |
| Basic structure | 100 % |

As understood from Table 1, recovery and reuse of the heat of the recovery gas C is possible in any one of three heat exchangers 41a to 41c, and the regeneration energy reduction effect is improved by repeating the supply of the recovered heat to the regenerator 20 using a plurality of heat exchangers. In the comparison of three heat exchangers 41a to 41c, the regeneration energy can be reduced most effectively when the recovered heat is supplied to the absorbing liquid A2 of the bottom portion of the regenerator 20 using the heat exchanger 41a. That is, it is advantageous to supply the recovered heat to the high-temperature portion.

However, when two heat exchangers are used, the regeneration energy is smaller in the case of using the heat exchangers 41a and 41c than that in the case of using the heat exchangers 41a and 41b. As one reason, it is considered that the heat exchange performance is not satisfactorily exhibited since the difference between the inlet temperature of the recovery gas C and the inlet temperature of the absorbing liquid (A1' + A2') in the heat exchanger 41b is small. That is, since the temperature difference between the recovery gas C and the absorbing liquid A1 at the inlet of the heat exchanger is in a degree that the heat exchange performance is exhibited very appropriately when the heat exchanger 41c is used, the heat is recovered again even when the amount of the water vapor and the latent heat discharged to the exhaust pipe 38 increases. As a result, it is more efficient than that of using the heat exchanger 41b. This dominant-subordinate relationship may be reversed by the use of heat exchangers having a higher heat exchange performance. Alternatively, the relationship is also reversed even when an additional compressor is provided at the downstream side of the heat exchanger 41a on the exhaust pipe 38. The heat exchange performance is sufficiently exhibited also by the heat exchanger 41b in accordance with an increase in temperature caused by the additional compression, and the amount of the recovery heat supplied to the first regenerating section 22a increases, so that the regeneration energy decreases. Accordingly, if the configuration of Fig. 1 is modified so that an additional compressor is provided in each of the location between the heat exchanger 41a and the heat exchanger 41b and the location between the heat exchanger 41b and the heat exchanger 41c so as to increase the temperature of the recovery gas C in, the heat recovery efficiency is improved in the heat exchanger 41b and the heat exchanger 41c, and hence the regeneration energy is reduced as much as possible.

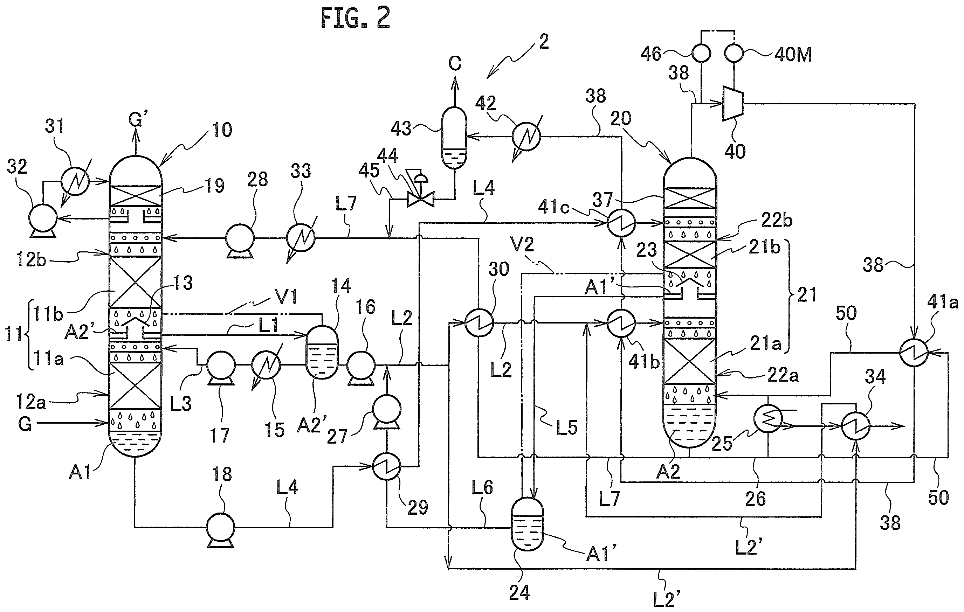

Fig. 2 illustrates a second embodiment of a recovery apparatus that performs the carbon dioxide recovery method of the invention. In the recovery apparatus 2 of Fig. 2, a third heat exchanger 34 and a branch path L2' branched from the path L2 are provided, a part of the absorbing liquid (A2' + A1') supplied from the tanks 14 and 24 to the path L2 is supplied to the third heat exchanger 34 without being introduced into the second heat exchanger 30, and the absorbing liquid is heated by using the remaining heat of the steam-condensed water discharged from the steam heater 25 in the third heat exchanger 34. Even after used for heating the absorbing liquid A2, the high-temperature steam in the steam heater 25 has a sufficiently high temperature of about 120°C or higher as a steam-condensed water. For this reason, the high-temperature steam-condensed water may be effectively used as a heating source for the absorbing liquid supplied to the regenerator 20. The absorbing liquid which is heated by the third heat exchanger 34 is joined with the absorbing liquid of the path L2 at the downstream side of the second heat exchanger 30 of the path L2 and is supplied to the first regenerating section 22a through the heat exchanger 41b. The heat of the recovery gas C compressed in the exhaust pipe 38 is recovered by the heat exchangers 41a to 41c similarly to the embodiment of Fig. 1, and the recovered heat is supplied to each of the absorbing liquid A2 of the bottom portion of the regenerator 20, the absorbing liquid (A2' + A1') to be supplied to the first regenerating section 22a from the path L2, and the absorbing liquid A1 to be supplied to the second regenerating section 22b from the path L4.

The temperature of the absorbing liquid supplied to the first regenerating section 22a can be set to be higher than that of the embodiment of Fig. 1 by the heat supplied at the third heat exchanger 34. In this connection, even when the heat exchanger 41b is omitted in the embodiment of Fig. 2, it is easy to recover the corresponding amount of heat by the heat exchanger 41c, in consideration of the result of Table 1. In that case, the heating temperature of the absorbing liquid A1 of the path L4 may become higher than that of the embodiment of Fig. 1. That is, it is possible to appropriately recover the heat from the compressed recovery gas C in the exhaust pipe 38 by the heat exchangers 41a and 41c. In other words, in the configuration of Fig. 2, the role of the second heat exchanger 30 which heats the absorbing liquid to be supplied to the first regenerating section 22a from the path L2 may be shared by the third heat exchanger 34. Accordingly, a smaller heat exchanger may be used as the second heat exchanger 30.

Since the recovery apparatus 2 of Fig. 2 is substantially similar to the recovery apparatus 1 of Fig. 1 except for the above-described matters, the description thereof will not be presented. Similarly to the embodiment of Fig. 1, the heat of the recovery gas C can be recovered and reused in any one of three heat exchangers 41a to 41c, and one or two thereof may be arbitrarily omitted.

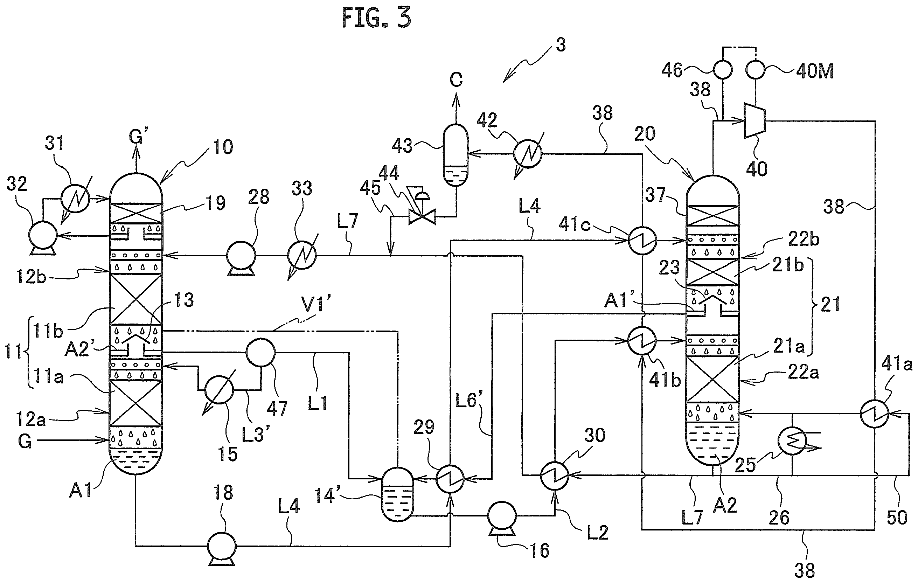

Fig. 3 illustrates a third embodiment of a recovery apparatus that performs the carbon dioxide recovery method of the present invention. In the recovery apparatus 3 of Fig. 3, the structure is simplified by decreasing the number of the pumps and the tanks. That is, the recovery apparatus 3 of Fig. 3 is configured to have a tank 14' that is obtained by integrating the tank 24 of the recovery apparatus 1 of Fig. 1 into the tank 14, and to omit the tank 24 of Fig. 1. As a result, the pump 27 of Fig. 1 is also omitted in the recovery apparatus 3. Further, it is configured so that the pump 17 of the path L3 of Fig. 1 may be also omitted. In this configuration, the branching point that divides the absorbing liquid A2' of the path L1 derived from the liquid reservoir of the second absorbing section 12b to the outside of the absorber 10 into two parts is provided at not the tank, but on the path L1. Then, the joining point where the branch flow system passing through the first absorbing section 12a and the second regenerating section 22b from the branching point is joined with the circulation system is located not on the path L2, but at the tank 14'.

Specifically, the absorbing liquid A2' which flows from the second absorbing section 12b through the path L1 is divided into two parts in a three-way valve 47 provided at the branching point on the path L1. A part of the absorbing liquid A2' flows down along the path L1 so as to be stored in the tank 14', and the other part thereof is supplied to the first absorbing section 12a through the path L3' while it is cooled by the cooler 15. Since the absorbing liquid A2' may be supplied from the second absorbing section 12b to the tank 14' and the first absorbing section 12a by means of gravity drop, omission of the pump is allowed in the paths L1' and L3', and the distribution ratio of the absorbing liquid A2' can be adjusted by the setting of the three-way valve 47. Further, the absorbing liquid A1' which is derived from the second regenerating section 22b to the outside of the regenerator 20 through the path L6' also flows down by the gravity drop so as to be stored in the tank 14'. In this portion, the absorbing liquid is merged with the part of the absorbing liquid A2' supplied from the path L1. That is, since the tank 14' has a role obtained by integrating the tank 14 and the tank 24 of Fig. 1 and the absorbing liquid A2' and the absorbing liquid A1' are merged in the tank 14', the pump 27 which supplies the absorbing liquid A1' from the tank 24 to the path L2 in Fig. 1 is unnecessary in the embodiment of Fig. 3.

The absorbing liquid (A1' + A2') of the tank 14' is supplied to the first regenerating section 22a through the path L2 by the pump 16. In the meantime, the absorbing liquid is subjected to heat exchange with the absorbing liquid A2 which flows from the first regenerating section 22a back to the second absorbing section 12b through the path L7 in the second heat exchanger 30. Further, the absorbing liquid A1' which flows out of the second regenerating section 22b through the path L6' exchanges heat, in the first heat exchanger 29, with the absorbing liquid A1 which flows out of the bottom portion of the absorber 10 through the path L4. The above-described configuration is similar to that of the recovery apparatus 1 of Fig. 1, except that the absorbing liquid A1' flowing out of the second regenerating section 22b is not stored in the tank. Also in the tank 14', a ventilation pipe V1' which communicates with the second absorbing section 12b is connected to the top thereof (as indicated by the two-dotted chain line of the drawing), in order to eliminate the pressure fluctuation inside the tank 14'.

The absorbing liquid A2 (the lean liquid) which is stored in the bottom portion of the regenerator 20 and which has sufficiently discharged the carbon dioxide therefrom is returned by the pump 28 to the upper portion of the second absorbing section 12b of the absorber 10 through the path L7 which connects the upper portion of the absorber 10 to the bottom portion of the regenerator 20.
As a result, the paths L1, L2, and L7 form a circulation path between the second absorbing section 12b and the first regenerating section 22a, and a circulation system is formed in which the absorbing liquids A2 and A2 reciprocate between the second absorbing section 12b and the first regenerating section 22a through the paths L1, L2, and L7. Further, the paths L3', L4, and L6' form a branch path which is branched from the circulation passage and is connected to the circulation system and extends from the second absorbing section 12b to reach the first regenerating section 22a through the first absorbing section 12a and the second regenerating section 22b. Then, a branch flow system is formed in which the absorbing liquid A2' is divided from the circulation system through the paths L3', L4, and L6' and passes through the first absorbing section 12a and the second regenerating section 22b as the absorbing liquids A1 and A1' to be joined to the circulation system.

The absorbing liquid A1' which has discharged the carbon dioxide in the second regenerating section 22b passes through the first heat exchanger 29 while flowing through the path L6' so as to exchange heat between the path L4 and the path L6'. Accordingly, the absorbing liquid A1' is cooled by the absorbing liquid A1 of the path L4, and is merged in the tank 14' with the absorbing liquid A2' of the path L1. Further, the absorbing liquid A2 which has discharged the carbon dioxide in the first regenerating section 22a passes through the second heat exchanger 30 while flowing through the path L7, and heat exchange is performed between the path L7 and the path L2 in the second heat exchanger 30. Accordingly, the absorbing liquid A2 is cooled by the absorbing liquid (A1' + A2') of the path L2, is sufficiently cooled by the cooler 33 using cooling water, and is introduced into the upper portion of the second absorbing section 12b. The heat is recovered from the compressed recovery gas C in the exhaust pipe 38 by the heat exchangers 41a to 41c similarly to the embodiment of Fig. 1, and the recovered heat is supplied to each of the absorbing liquid A2 of the bottom portion of the regenerator 20, the absorbing liquid (A2' + A1') supplied from the path L2 to the first regenerating section 22a, and the absorbing liquid A1 supplied from the path L4 to the second regenerating section 22b. The heat recovery effect of the embodiment of Fig. 3 is similar to that of the embodiment of Fig. 1, and the regeneration energy necessary for the recovery of the carbon dioxide is obtained same as illustrated in Table 1.

Since the recovery apparatus 3 of Fig. 3 is similar to the recovery apparatus 1 of Fig. 1 except for the above-described matters, the description thereof will not be presented. The recovery apparatus 3 of Fig. 3 may be also modified as in the recovery apparatus 2 of Fig. 2. That is, when the branch path and the heat exchanger are provided so that the absorbing liquid supplied from the tank 14' to the first regenerating section 22a through the path L2 is divided before the absorbing liquid is supplied to the second heat exchanger 30, and that a part of the absorbing liquid is heated by the waste heat from the steam heater 25 and is then joined with the path L2 at the downstream side of the second heat exchanger 30, the second heat exchanger 30 may be decreased in size similarly to the embodiment of Fig. 2, and the heat is easily recovered from the recovery gas C even when the heat exchanger 41b is omitted. Further, since it is possible to recover and reuse the heat of the recovery gas C in any one of three heat exchangers 41a to 41c similarly to the embodiment of Fig. 1, one or two thereof may be arbitrarily omitted.

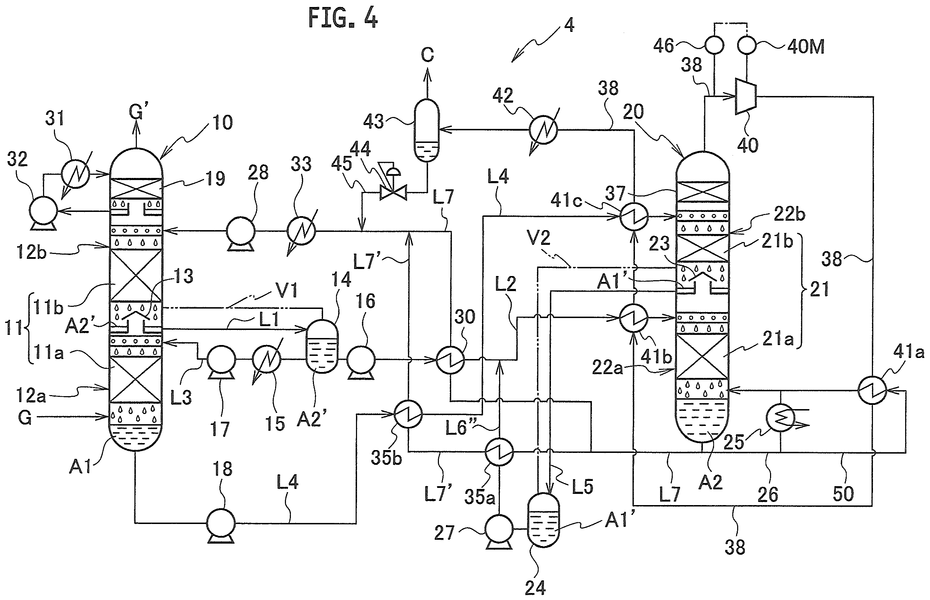

Fig. 4 illustrates a fourth embodiment of a recovery apparatus that performs the carbon dioxide recovery method of the present invention. This embodiment is configured to improve the heat exchange of the absorbing liquid A1' supplied from the tank 24 to the path L2 in the recovery apparatus of Fig. 1. In Fig. 1, the absorbing liquid A1' which is supplied from the tank 24 to the path L2 is cooled once by the first heat exchanger 29, and is merged with the absorbing liquid of the path L2, which is heated in the second heat exchanger 30 again. However, it is preferable that the absorbing liquid be joined to the path L2 without cooling, from the viewpoint of suppressing the deterioration of the absorbing liquid. For this reason, a branch path L7' is branched in parallel from and connected to the path L7 in which the absorbing liquid returns from the first regenerating section 22a to the second absorbing section 12b, and the branch path L7' is provided with two heat exchangers 35a and 35b instead of the first heat exchanger 29. The absorbing liquid A1' of the tank 24 is heated by the heat exchange with the branch path L7' and is joined to the path L2.

Specifically, two heat exchangers 35a and 35b are provided in the branch path L7' which are branched in parallel from the path L7 extending from the first regenerating section 22a to the second absorbing section 12b, and a heat is exchanged between the absorbing liquid A1' of the path L6" joined with the path L2 from the tank 24 and the absorbing liquid A2 returning from the regenerator 20 to the absorber 10 in the upstream heat exchanger 35a. The absorbing liquid A1' which flows from the tank 24 to the path L6" by the pump 27 is heated by the hottest absorbing liquid A2 so that the temperature is equal to the heating temperature of the second heat exchanger 30 in the path L2. Accordingly, efficient heat exchange is made by the connection of the path L6" at the downstream side of the second heat exchanger 30 in the path L2. Meanwhile, since the temperature of the absorbing liquid A2 flowing through the branch path L7' decreases to the temperature close to the temperature of the absorbing liquid A1' inside the tank 24 due to the heat exchange in the heat exchanger 35a, the heat exchange condition becomes equal to that of the first heat exchanger 29 of Fig. 1 due to the heat exchange with the absorbing liquid A1 of the path L4 in the downstream heat exchanger 35b. Accordingly, since the temperature condition of the absorbing liquid introduced into the regenerator 20 is similar to that of the embodiment of Fig. 1, the heat is recovered from the compressed recovery gas C in the exhaust pipe 38 by the heat exchangers 41a to 41c similarly to the embodiment of Fig. 1. Then, the recovered heat is supplied to each of the absorbing liquid A2 of the bottom portion of the regenerator 20, the absorbing liquid (A2' + A1') supplied from the path L2 to the first regenerating section 22a, and the absorbing liquid A1 supplied from the path L4 to the second regenerating section 22b. The heat recovery effect of the embodiment of Fig. 4 is similar to that of the embodiment of Fig. 1, and the regeneration energy necessary for the recovery of the carbon dioxide is obtained as same as illustrated in Table 1.

Since a recovery apparatus 4 of Fig. 4 is substantially similar to the recovery apparatus 1 of Fig. 1 except for the above-described matters, the description thereof will not be presented. The recovery apparatus 4 of Fig. 4 may be also modified similarly to the recovery apparatus 2 of Fig. 2. That is, the branch path and the heat exchanger are provided in such a manner that a part of the absorbing liquid A2' to be supplied from the tank 14 to the first regenerating section 22a through the path L2 is divided before it is supplied to the second heat exchanger 30, so as to be heated by the waste heat from the steam heater 25 and be joined then to the path L2 at the downstream side of the second heat exchanger 30. Then it is possible to reduce the size of the second heat exchanger 30, and efficient recovery of the heat of the recovery gas C is easy even when the heat exchanger 41b is omitted. Further, since the heat of the recovery gas C can be recovered and reused in any one of three heat exchangers 41a to 41c similarly to the embodiment of Fig. 1, one or two thereof may be arbitrarily omitted.

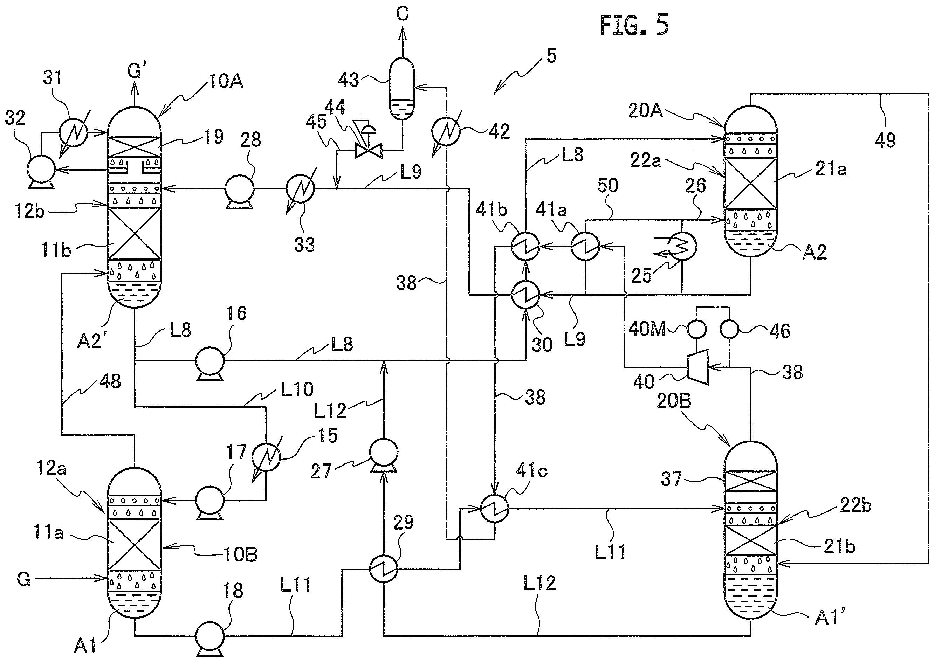

Fig. 5 illustrates a fifth embodiment of the recovery apparatus that performs the carbon dioxide recovery method of the present invention. This embodiment is an embodiment that is possibly obtained by combining two recovery apparatuses with each other. Namely, the absorber 10 of the recovery apparatus 1 of Fig. 1 is formed by using two independent absorbers, in which the first and second absorbing sections are respectively distributed into the absorbers, and the regenerator 20 is formed by using two independent regenerators, in which the first and second regenerating sections are respectively distributed into the regenerators. These components are connected through pipes so as to be operated equivalently to the recovery apparatus of Fig. 1. In other words, this embodiment is a useful embodiment capable of improving the treatment efficiency, which is obtained by additionally providing another absorber and another regenerator to the already-existing recovery apparatus, or by using two already-existing recovery apparatuses. Then, the recovery apparatuses are connected to each other so as to form the circulation system by one of the recovery apparatuses and form the branch flow system by the other apparatus, thus making it possible to perform the carbon dioxide recovery.

Specifically, an absorber 10A substantially has the same configuration as the configuration in which the first absorbing section 12a and the partition member 13 are removed from the absorber 10 of Fig. 1, and a regenerator 20A is formed only by the first regenerating section 22a and the lower portion therefrom of the regenerator 20 of Fig. 1. Further, an absorber 10B is formed only by the first absorbing section 12a and the lower portion therefrom of the absorber 10 of Fig. 1, and a regenerator 20B substantially has the same configuration as the configuration in which the first regenerating section 22a, the partition member 23, and the reboiler are removed from the regenerator 20 of Fig. 1. The top of the absorber 10B is connected to the lower portion of the absorber 10A by a pipe 48. Thus, by supplying the gas G to the lower portion of the absorber 10B, the gas G sequentially passes through the first absorbing section 12a of the absorber 10B and the second absorbing section 12b of the absorber 10A, and the gas G' from which the carbon dioxide has been removed is discharged from the top of the absorber 10A. Further, the top of the regenerator 20A is connected to the lower portion of the regenerator 20B by a pipe 49. The recovery gas C which contains the carbon dioxide generated inside the regenerator 20A by the heating of the steam heater 25 is supplied to the lower portion of the regenerator 20B through the pipe 49 so as to pass through the second regenerating section 22b, and is supplied to the compressor 40 through the exhaust pipe 38 connected to the top of the regenerator 20B. Then the gas passes through the heat exchangers 41a to 41c and the cooler 42, and is then discharged through the gas-liquid separator 43.

The paths L8 and L9 form a circulation path between the absorber 10A and the regenerator 20A, and a circulation system is formed in which the absorbing liquid A2' of the bottom portion of the absorber 10A and the absorbing liquid A2 of the bottom portion of the regenerator 20A are circulated between the second absorbing section 12b and the first regenerating section 22a through the paths L8 and L9. The paths L8 and L9 are respectively provided with the pumps 16 and 28. Further, the paths L10, L11, and L12 form a branch path which is branched from the path L8 and is connected to the path L8 through the absorber 10B and the regenerator 20B, and the paths L10, L11, and L12 are provided, respectively, with the pumps 17, 18, and 27. A part of the absorbing liquid A2' (the semi-rich liquid) of the bottom portion of the absorber 10A is supplied to the absorber 10B through the path L10 branched from the path L8, and is stored in the bottom portion while the carbon dioxide is absorbed in the first absorbing section 12a. The absorbing liquid A1 (the rich liquid) of the bottom portion of the absorber 10B is supplied to the regenerator 20B through the path L11, and is regenerated by a certain degree in the second regenerating section 22b, which is stored in the bottom portion. Subsequently, the absorbing liquid from the bottom portion of the regenerator 20B, as the semi-lean absorbing liquid A1', flows through the path L12 and is merged with the absorbing liquid A2' of the path L8, which is supplied to the first regenerating section 22a of the regenerator 20A. In this way, the branch flow system is formed. In the branch flow system, heat exchange is performed between the path L11 and the path L12 by the first heat exchanger 29. Then, in the circulation system, heat exchange is performed between the path L8 and the path L9 by the second heat exchanger 30. Further, the heat exchangers 41a to 41c provided on the exhaust pipe 38 through which the recovery gas C compressed by the compressor 40 flows are arranged so as to perform the heat exchange of the absorbing liquid sequentially with the circulation path 50, the path L8, and the path L11. Accordingly, a part of the absorbing liquid A2 of the bottom portion of the regenerator 20A is first heated by the recovery gas C in the heat exchanger 41a, and then the absorbing liquid (A2' + A1') of the path L8 of the circulation system is heated, in the heat exchanger 41b, by heat exchange with the recovery gas C at the downstream side of the second heat exchanger 30. Further, in the heat exchanger 41c, the absorbing liquid A1 of the path L11 of the branch flow system is heated by heat exchange with the recovery gas C at the downstream side of the first heat exchanger 29. Accordingly, the heat recovery from the compressed recovery gas C in the exhaust pipe 38 is performed by the heat exchangers 41a to 41c similarly to the embodiment of Fig. 1, and the recovered heat is supplied to the absorbing liquid A2 of the bottom portion of the regenerator 20A, the absorbing liquid (A2' + A1') supplied from the path L8 to the first regenerating section 22a, and the absorbing liquid A1 supplied from the path L11 to the second regenerating section 22b. The heat recovery effect of the embodiment of Fig. 5 is similar to that of the embodiment of Fig. 1, and the regeneration energy necessary for the recovery of the carbon dioxide is possibly obtained as same as illustrated in Table 1.

In the embodiment of Fig. 5, since the absorbing liquid is stored in the bottom portions of the absorber 10A and the regenerator 20B, the storing capability of those portions is usable for the roles of the tanks 14 and 24 of Fig. 1. Accordingly, the tanks 14 and 24 of Fig. 1 are unnecessary for the recovery apparatus 5. When the recovery apparatus of Fig. 5 is formed by using a conventional recovery apparatus, it is advisable, for example, to use the conventional recovery apparatus as the absorber 10B and the regenerator 20B of the branch flow system, additionally provide the absorber 10A and the regenerator 20A, and connect thereto the paths for the absorbing liquid and the gas flow pipes so as to form the circulation system.

Since the recovery apparatus 5 of Fig. 5 is substantially similar to the recovery apparatus 1 of Fig. 1 except for the above-described matters, the description thereof will not be presented. The recovery apparatus 5 of Fig. 5 may also be modified similarly to the recovery apparatus 2 of Fig. 2. Specifically, a branch path and a heat exchanger may be provided in such a manner that the absorbing liquid (A1' + A2') to be supplied to the first regenerating section 22a through the path L8 is divided before the absorbing liquid is supplied to the second heat exchanger 30, and that a part of the absorbing liquid is heated by the remaining heat from the steam heater 25 and is then joined into the path L8 at the downstream side of the second heat exchanger 30. In this way, it is possible to increase the temperature of the absorbing liquid introduced into the first regenerating section 22a and reduce the size of the second heat exchanger 30. Further, even when the heat exchanger 41b is omitted, the heat from the recovery gas C is easily and efficiently exchanged. Alternatively, it is allowable in the path L12 to provide a heat exchanger which heats the absorbing liquid A1' before joined into the path L8, by the remaining heat from the steam heater 25, and shift the joint point between the path L12 and the path L8 to a downstream position of the second heat exchanger 30. Alternatively, it is allowable, as same in the recovery apparatus 4 of Fig. 4, to provide a branch path which is branched from the path L9 through which the absorbing liquid A2 returns from the first regenerating section 22a to the second absorbing section 12b, and change the heat exchange to such a form to sequentially exchange heat with the path L12 and L11, so as to cause the absorbing liquid A1' of the path L2 to be joined into the path L8 without any heat exchange with the path L11. Further, the modification in Fig. 2 and the modification in Fig. 4 may be used in combination in this embodiment. That is, two heat exchangers which heat the absorbing liquid by the remaining heat from the steam heater 25, instead of the first heat exchanger 29, are provided and arranged so as to exchange heat with the absorbing liquid A1' of the path L12 in the upstream-side (high temperature side) heat exchanger and exchange heat with the absorbing liquid A1 of the path L11 in the downstream-side (low temperature side) heat exchanger, and the path L12 at the downstream side of the upstream-side (high temperature side) heat exchanger is connected to the path L8 at the downstream side of the second heat exchanger 30. In this way, the absorbing liquid A1' of the regenerator 20B is directly heated without being cooled, and is supplied to the regenerator 20A so that the waste heat is used to supply the thermal energy to be consumed in the branch flow system. Further, since the heat of the recovery gas C can be recovered and reused in any one of three heat exchangers 41a to 41c as in the embodiment of Fig. 1, one or two thereof may be arbitrarily omitted.

### Industrial Applicability

The present invention is usable for a treatment or some other operation of carbon-dioxide-containing gas discharged from thermal power plants, ironworks, boilers and other facilities, and is useful for reducing the amount of discharged carbon dioxide from them, the effect thereof onto the environment, and others. The present invention possibly provides a carbon dioxide recovery apparatus capable of reducing costs required for carbon dioxide collecting process, and contributing to energy saving and environmental protection.

## Claims

1. A carbon dioxide recovery apparatus (1-5), comprising:
an absorber (10) which brings a gas (G) into contact with an absorbing liquid (A2,A2') and to allow the absorbing liquid to absorb carbon dioxide contained in the gas, the absorber having a first absorbing section (12a) and a second absorbing section (12b) which are partitioned and arranged to supply the gas through the first absorbing section into the second absorbing section;
a regenerator (20) which regenerates the absorbing liquid (A1,A1') by heating the absorbing liquid having carbon dioxide absorbed in the absorber to cause the absorbing liquid to release the carbon dioxide, the regenerator having a first regenerating section (22a) having an external heating implement (25) and a second regenerating section (22b) being partitioned from the first regenerating section and arranged to be heated by heat from gas discharged from the first regenerating section;
a circulation mechanism comprising a circulation system (L1,L2,L2',L7,L7',L8,L9) having a supply path (L1,L2,L2',L8) for supply from the second absorbing section to the first regenerating section and a return path (L7,L7',L9) for return from the first regenerating section to the second absorbing section to circulate the absorbing liquid between the second absorbing section and the first regenerating section, and a branch flow system (L3-L6,L3',L6',L6",L10-L12) branched from the supply path of the circulation system to cause a part of the absorbing liquid circulated in the circulation system to flow from the second absorbing section through the first absorbing section and the second regenerating section successively and be joined with the rest of the absorbing liquid to be supplied to the first regenerating section;
a cooler (15) which cools the part of the absorbing liquid (A2') to be supplied into the first absorbing section in the branch flow system;
a compressor (40) which directly compresses a recovery gas (C) discharged from the regenerator and containing carbon dioxide and steam; and
a heat recovery system (41a-41c) which recovers heat of the recovery gas compressed by the compressor and supplies the heat to the regenerator.

2. The carbon dioxide recovery apparatus according to claim 1, further comprising:
a gas-liquid separator (43) which separates water condensed from the recovery gas from which the heat is recovered by the heat recovery system; and
a water supply path (45) which supplies the water separated in the gas-liquid separator to the absorbing liquid returned from the first regenerating section to the second absorbing section in the circulation system.

3. The carbon dioxide recovery apparatus according to claim 1 or 2, wherein the second regenerating section has no external heating implement.

4. The carbon dioxide recovery apparatus according to any one of claims 1 to 3, wherein the branch flow system has a first path (L3,L3',L8,L10) which is branched from the circulation system to supply the absorbing liquid from the second absorbing section to the first absorbing section, a second path (L4,L11) which supplies the absorbing liquid from the first absorbing section to the second regenerating section, and a third path (L5,L6,L6',L12) which extends from the second regenerating section to be joined with the circulation system, and
wherein the first path of the branch flow system has the cooler (15).

5. The carbon dioxide recovery apparatus (1-3,5) according to claim 4, wherein the circulation mechanism includes a first heat exchanger (29) and a second heat exchanger (30), the first heat exchanger is disposed to exchange heat between the second path and the third path in the branch flow system, and the second heat exchanger is disposed to exchange heat between the supply path and the return path in the circulation system.

6. The carbon dioxide recovery apparatus according to claim 5, wherein the circulation system is connected to the branch flow system in such a manner that the absorbing liquid of the supply path (L1,L2,L8) in the circulation system is joined with the absorbing liquid of the third passage (L6,L6',L12) of the branch flow system at the upstream side of the second heat exchanger.

7. The carbon dioxide recovery apparatus (3) according to claim 6, wherein the circulation system has a tank (14') which is provided on the supply path to store the absorbing liquid to be supplied from the second absorbing section to the first regenerating section at the upstream side of the second heat exchanger, and the circulation system is connected to the branch flow system in such a manner that, in the tank, the absorbing liquid of the supply path is joined with the absorbing liquid of the third path of the branch flow system.

8. The carbon dioxide recovery apparatus (4) according to claim 4, wherein the return path (L7,L7') includes a first return path (L7') and a second return path (L7) which are branched from each other to return the absorbing liquid from the first regenerating section to the second absorbing section, and the circulation mechanism has a first heat exchanger (35a) which exchanges heat between the first return path of the circulation system and the third path of the branch flow system, a second heat exchanger (30) which exchanges heat between the supply path and the second return path in the circulation system, and a third heat exchanger (35b) which exchanges heat between the first return path and the second path of the branch flow system at the downstream side of the first heat exchanger in the first return path of the circulation system.

9. The carbon dioxide recovery apparatus (1-3,5) according to any one of claims 5 to 7, wherein the heat recovery system has a heat exchanger (41c) which exchanges heat between the recovery gas compressed by the compressor and the absorbing liquid between the first heat exchanger and the second regenerating section in the second path of the branch flow system, thereby heat of the recovery gas is supplied to the second regenerating section through the absorbing liquid of the branch flow system.

10. The carbon dioxide recovery apparatus (4) according to claim 8, wherein the heat recovery system has a heat exchanger (41c) which exchanges heat between the recovery gas compressed by the compressor and the absorbing liquid between the third heat exchanger and the second regenerating section in the second path of the branch flow system, thereby heat of the recovery gas is supplied to the second regenerating section through the absorbing liquid of the branch flow system.

11. The carbon dioxide recovery apparatus (1-5) according to any one of claims 5 to 10, wherein the heat recovery system has a heat exchanger (41b) which exchanges heat between the recovery gas compressed by the compressor and the absorbing liquid between the second heat exchanger and the first regenerating section in the supply path of the circulation system, thereby heat of the recovery gas is supplied to the first regenerating section through the absorbing liquid of the circulation system.

12. The carbon dioxide recovery apparatus according to any one of claims 1 to 11, wherein the heat recovery system comprises:
a circulation path (50) which circulates the absorbing liquid between the first regenerating section and the outside of the regenerator; and
a heat exchanger (41a) which exchanges heat between the absorbing liquid of the circulation path and the recovery gas compressed by the compressor, thereby heat of the recovery gas is supplied to the first regenerating section through the absorbing liquid of the circulation path.

13. The carbon dioxide recovery apparatus (2) according to any one of claims 1 to 12, wherein the circulation system further includes a flow path (L2') and a heat exchanger (34) which heat a part of the absorbing liquid to be supplied from the second absorbing section to the first regenerating section by using waste heat of the external heating implement of the regenerator.

14. The carbon dioxide recovery apparatus (5) according to any one of claims 1 to 13, wherein the absorber comprises two separate columns (10A, 10B) to each of which the first absorbing section and the second absorbing section are distributed, respectively, and the regenerator comprises two separate columns (20A, 20B) to each of which the first regenerating section and the second regenerating section are distributed, respectively.

15. A carbon dioxide recovery method being conducted in an apparatus according to claim 1, comprising:
an absorption treatment of bringing a gas into contact with an absorbing liquid to cause carbon dioxide contained in the gas to be absorbed into the absorbing liquid, the absorption treatment having a first absorbing step and a second absorbing step, and the gas being supplied to the second absorbing step through the first absorbing step;
a regeneration treatment of heating the absorbing liquid in which carbon dioxide is absorbed in the absorption treatment to discharge the carbon dioxide, thereby regenerating the absorbing liquid, the regeneration treatment having a first regenerating step and a second regenerating step, the absorbing liquid being heated in the first regenerating step with use of an external heating implement, and the absorbing liquid being heated in the second regenerating step with use of heat of the gas discharged in the first regenerating step;
a circulation treatment comprising a circulating step of circulating the absorbing liquid between the second absorbing step and the first regenerating step, and a branch flow step of causing a part of the absorbing liquid circulated in the circulating step to flow, as a branch flow, from the second absorbing step through the first absorbing step and the second regenerating step successively, be joined with the rest of the absorbing liquid and be directed then to the first regenerating step;
a cooling treatment of cooling the absorbing liquid of the branch flow to be supplied to the first absorbing step from the second absorbing step in the branch flow step;
a compression step of directly compressing a recovery gas being discharged from the regeneration treatment and containing carbon dioxide and steam; and
a heat recovery step of recovering heat of the recovery gas compressed by the compression step and supplying the heat to the regeneration treatment.

## Patentansprüche

1. Kohlenstoffdioxid-Rückgewinnungsvorrichtung (1-5), umfassend:
einen Absorber (10), der ein Gas (G) mit einer Absorbierflüssigkeit (A2, A2') in Kontakt bringt, um der Absorbierflüssigkeit zu ermöglichen, im Gas enthaltenes Kohlenstoffdioxid zu absorbieren, wobei der Absorber einen ersten Absorbierabschnitt (12a) und einen zweiten Absorbierabschnitt (12b) aufweist, die abgetrennt und dafür eingerichtet sind, das Gas durch den ersten Absorbierabschnitt in den zweiten Absorbierabschnitt zuzuführen;
einen Regenerator (20), der die Absorbierflüssigkeit regeneriert (A1, A1'), indem die Absorbierflüssigkeit, die im Absorber Kohlenstoffdioxid absorbiert hat, erwärmt wird, um zu bewirken, dass die Absorbierflüssigkeit das Kohlenstoffdioxid freisetzt, wobei der Regenerator einen ersten Regenerierabschnitt (22a) mit einer externen Heizeinrichtung (25) und einen zweiten Regenerierabschnitt (22b) aufweist, der vom ersten Regenerierabschnitt abgetrennt und dafür eingerichtet ist, durch Wärme aus Gas erwärmt zu werden, das aus dem ersten Regenerierabschnitt freigesetzt wurde;
einen Zirkulationsmechanismus, der Folgendes umfasst: ein Zirkulationssystem (L1, L2, L2', L7, L7', L8, L9) mit einem Zuführungsweg (L1, L2, L2', L8) zur Zuführung vom zweiten Absorbierabschnitt zum ersten Regenerierabschnitt und einen Rückführungsweg (L7, L7', L9) zur Rückführung vom ersten Regenerierabschnitt zum zweiten Absorbierabschnitt, um die Absorbierflüssigkeit zwischen dem zweiten Absorbierabschnitt und dem ersten Regenerierabschnitt zirkulieren zu lassen, und ein Zweigstromsystem (L3-L6, L3', L6', L6", L10-L12), das vom Zuführungsweg des Zirkulationssystems abzweigt, um zu bewirken, dass ein Teil der im Zirkulationssystem zirkulierenden Absorbierflüssigkeit vom zweiten Absorbierabschnitt nacheinander durch den ersten Absorbierabschnitt und den zweiten Regenerierabschnitt strömt und mit dem Rest der Absorbierflüssigkeit vereint wird, um dem ersten Regenerierabschnitt zugeführt zu werden;
einen Kühler (15), der den Teil der Absorbierflüssigkeit (A2') kühlt, der im Zweigstromsystem dem ersten Absorbierabschnitt zuzuführen ist;
einen Kompressor (40), der ein Rückgewinnungsgas (C) direkt komprimiert, das aus dem Regenerator freigesetzt wurde und Kohlenstoffdioxid und Dampf enthält; und
ein Wärmerückgewinnungssystem (41a-41c), das Wärme des durch den Kompressor komprimierten Rückgewinnungsgases zurückgewinnt und die Wärme dem Regenerator zuführt.

2. Kohlenstoffdioxid-Rückgewinnungsvorrichtung nach Anspruch 1, ferner umfassend:
einen Gas-Flüssigkeit-Separator (43), der Wasser abtrennt, das aus dem Rückgewinnungsgas kondensiert, aus dem die Wärme durch das Wärmerückgewinnungssystem zurückgewonnen wird; und
einen Wasserzuführungsweg (45), der das im Gas-Flüssigkeit-Separator abgetrennte Wasser der Absorbierflüssigkeit zuführt, die im Zirkulationssystem vom ersten Regenerierabschnitt zum zweiten Absorbierabschnitt zurückgeführt wird.

3. Kohlenstoffdioxid-Rückgewinnungsvorrichtung nach Anspruch 1 oder 2, worin der zweite Regenerierabschnitt keine externe Heizeinrichtung aufweist.

4. Kohlenstoffdioxid-Rückgewinnungsvorrichtung nach einem der Ansprüche 1 bis 3, worin das Zweigstromsystem aufweist: einen ersten Weg (L3, L3', L8, L10), der vom Zirkulationssystem abgezweigt ist, um die Absorbierflüssigkeit vom zweiten Absorbierabschnitt dem ersten Absorbierabschnitt zuzuführen, einen zweiten Weg (L4, L11), der die Absorbierflüssigkeit vom ersten Absorbierabschnitt dem zweiten Regenerierabschnitt zuführt, und einen dritten Weg (L5, L6, L6', L12), der sich vom zweiten Regenerierabschnitt erstreckt, um mit dem Zirkulationssystem vereinigt zu werden, und
worin der erste Weg des Zweigstromsystems den Kühler (15) aufweist.

5. Kohlenstoffdioxid-Rückgewinnungsvorrichtung (1-3, 5) nach Anspruch 4, worin der Zirkulationsmechanismus einen ersten Wärmeübertrager (29) und einen zweiten Wärmeübertrager (30) einschließt, wobei der erste Wärmeübertrager dafür angeordnet ist, Wärme zwischen dem zweiten Weg und dem dritten Weg im Zweigstromsystem zu übertragen, und der zweite Wärmeübertrager dafür angeordnet ist, Wärme zwischen dem Zuführungsweg und dem Rückführungsweg im Zirkulationssystem zu übertragen.

6. Kohlenstoffdioxid-Rückgewinnungsvorrichtung nach Anspruch 5, worin das Zirkulationssystem auf solche Weise mit dem Zweigstromsystem verbunden ist, dass die Absorbierflüssigkeit des Zuführungswegs (L1, L2, L8) im Zirkulationssystem auf der Zulaufseite des zweiten Wärmeübertragers mit der Absorbierflüssigkeit des dritten Durchgangs (L6, L6', L12) des Zweigstromsystems vereinigt wird.

7. Kohlenstoffdioxid-Rückgewinnungsvorrichtung (3) nach Anspruch 6, worin das Zirkulationssystem einen Tank (14') aufweist, der am Zuführungsweg bereitgestellt ist, um die Absorbierflüssigkeit, die dem ersten Regenerierabschnitt vom zweiten Absorbierabschnitt zuzuführen ist, auf der Zulaufseite des zweiten Wärmeübertragers zu speichern, und das Zirkulationssystem auf solche Weise mit dem Zweigstromsystem verbunden ist, dass die Absorbierflüssigkeit des Zuführungswegs im Tank mit der Absorbierflüssigkeit des dritten Weges des Zweigstromsystems vereinigt wird.

8. Kohlenstoffdioxid-Rückgewinnungsvorrichtung (4) nach Anspruch 4, worin der Rückführungsweg (L7, L7') einen ersten Rückführungsweg (L7') und einen zweiten Rückführungsweg (L7) einschließt, die voneinander abzweigen, um die Absorbierflüssigkeit vom ersten Regenerierabschnitt zum zweiten Absorbierabschnitt zurückzuführen, und der Zirkulationsmechanismus aufweist: einen ersten Wärmeübertrager (35a), der Wärme zwischen dem ersten Rückführungsweg des Zirkulationssystems und dem dritten Weg des Zweigstromsystems überträgt, einen zweiten Wärmeübertrager (30), der Wärme zwischen dem Zuführungsweg und dem zweiten Rückführungsweg im Zirkulationssystem überträgt, und einen dritten Wärmeübertrager (35b), der Wärme zwischen dem ersten Rückführungsweg und dem zweiten Weg des Zweigstromsystems überträgt, und zwar auf der Ablaufseite des ersten Wärmeübertragers im ersten Rückführungsweg des Zirkulationssystems.

9. Kohlenstoffdioxid-Rückgewinnungsvorrichtung (1-3, 5) nach einem der Ansprüche 5 bis 7, worin das Wärmerückgewinnungssystem einen Wärmeübertrager (41c) aufweist, der Wärme zwischen dem durch den Kompressor komprimierten Rückgewinnungsgas und der Absorbierflüssigkeit zwischen dem ersten Wärmeübertrager und dem zweiten Regenerierabschnitt im zweiten Weg des Zweigstromsystems überträgt, wodurch Wärme des Rückgewinnungsgases durch die Absorbierflüssigkeit des Zweigstromsystems dem zweiten Regenerierabschnitt zugeführt wird.

10. Kohlenstoffdioxid-Rückgewinnungsvorrichtung (4) nach Anspruch 8, worin das Wärmerückgewinnungssystem einen Wärmeübertrager (41c) aufweist, der Wärme zwischen dem durch den Kompressor komprimierten Rückgewinnungsgas und der Absorbierflüssigkeit zwischen dem dritten Wärmeübertrager und dem zweiten Regenerierabschnitt im zweiten Weg des Zweigstromsystems überträgt, wodurch Wärme des Rückgewinnungsgases durch die Absorbierflüssigkeit des Zweigstromsystems dem zweiten Regenerierabschnitt zugeführt wird.

11. Kohlenstoffdioxid-Rückgewinnungsvorrichtung (1-5) nach einem der Ansprüche 5 bis 10, worin das Wärmerückgewinnungssystem einen Wärmeübertrager (41b) aufweist, der Wärme zwischen dem durch den Kompressor komprimierten Rückgewinnungsgas und der Absorbierflüssigkeit zwischen dem zweiten Wärmeübertrager und dem ersten Regenerierabschnitt im Zuführungsweg des Zirkulationssystems überträgt, wodurch Wärme des Rückgewinnungsgases durch die Absorbierflüssigkeit des Zirkulationssystems dem ersten Regenerierabschnitt zugeführt wird.

12. Kohlenstoffdioxid-Rückgewinnungsvorrichtung nach einem der Ansprüche 1 bis 11, worin das Wärmerückgewinnungssystem umfasst:
einen Zirkulationsweg (50), der die Absorbierflüssigkeit zwischen dem ersten Regenerierabschnitt und der Außenseite des Regenerators zirkulieren lässt; und
einen Wärmeübertrager (41a), der Wärme zwischen der Absorbierflüssigkeit des Zirkulationsweges und dem durch den Kompressor komprimierten Rückgewinnungsgas überträgt, wodurch Wärme des Rückgewinnungsgases durch die Absorbierflüssigkeit des Zirkulationsweges dem ersten Regenerierabschnitt zugeführt wird.

13. Kohlenstoffdioxid-Rückgewinnungsvorrichtung (2) nach einem der Ansprüche 1 bis 12, worin das Zirkulationssystem ferner einen Strömungsweg (L2') und einen Wärmeübertrager (34) einschließt, die einen Teil der Absorbierflüssigkeit, die dem ersten Regenerierabschnitt vom zweiten Absorbierabschnitt zuzuführen ist, durch Verwenden von Abwärme der externen Heizeinrichtung des Regenerators erwärmen.

14. Kohlenstoffdioxid-Rückgewinnungsvorrichtung (5) nach einem der Ansprüche 1 bis 13, worin der Absorber zwei getrennte Säulen (10A, 10B) umfasst, wobei der erste Absorbierabschnitt bzw. der zweite Absorbierabschnitt auf jede davon verteilt sind, und der Regenerator zwei getrennte Säulen (20A, 20B) umfasst, wobei der erste Regenerierabschnitt bzw. der zweite Regenerierabschnitt auf jede davon verteilt sind.

15. Kohlenstoffdioxid-Rückgewinnungsverfahren, das in einer Vorrichtung nach Anspruch 1 durchgeführt wird, umfassend:
eine Absorptionsbehandlung, nämlich in Kontakt Bringen eines Gases mit einer Absorbierflüssigkeit, um zu bewirken, dass im Gas enthaltenes Kohlenstoffdioxid in der Absorbierflüssigkeit absorbiert wird, wobei die Absorptionsbehandlung einen ersten Absorbierschritt und einen zweiten Absorbierschritt aufweist und das Gas dem zweiten Absorbierschritt durch den ersten Absorbierschritt zugeführt wird;
eine Regenerationsbehandlung, nämlich Erwärmen der Absorbierflüssigkeit, in der bei der Absorptionsbehandlung Kohlenstoffdioxid absorbiert wird, um das Kohlenstoffdioxid freizusetzen, wodurch die Absorbierflüssigkeit regeneriert wird, wobei die Regenerationsbehandlung einen ersten Regenerierschritt und einen zweiten Regenerierschritt aufweist, wobei die Absorbierflüssigkeit im ersten Regenerierschritt unter Verwendung einer externen Heizeinrichtung erwärmt wird und die Absorbierflüssigkeit im zweiten Regenerierschritt unter Verwendung von Wärme des im ersten Regenerierschritt freigesetzten Gases erwärmt wird;
eine Zirkulationsbehandlung, umfassend einen Zirkulierschritt, nämlich Zirkulierenlassen der Absorbierflüssigkeit zwischen dem zweiten Absorbierschritt und dem ersten Regenerierschritt, und einen Zweigstromschritt, nämlich Bewirken, dass ein Teil der im Zirkulierschritt zirkulieren gelassenen Absorbierflüssigkeit als Zweigstrom vom zweiten Absorbierschritt nacheinander durch den ersten Absorbierschritt und den zweiten Regenerierschritt strömt, mit dem Rest der Absorbierflüssigkeit vereint wird und dann zum ersten Regenerierabschnitt geführt wird;
eine Kühlbehandlung, nämlich Kühlen der Absorbierflüssigkeit des Zweigstroms, die dem ersten Absorbierabschnitt im Zweigstromschritt vom zweiten Absorbierschritt zuzuführen ist;
einen Kompressionsschritt, nämlich direktes Komprimieren eines Rückgewinnungsgases, das aus der Regenerationsbehandlung freigesetzt wird und Kohlenstoffdioxid und Dampf enthält; und
einen Wärmerückgewinnungsschritt, nämlich Rückgewinnen von Wärme des durch den Kompressionsschritt komprimierten Rückgewinnungsgases und Zuführen der Wärme zur Regenerationsbehandlung.

## Revendications

1. Appareil de récupération de dioxyde de carbone (1 à 5), comprenant :
un absorbeur (10) qui met un gaz (G) en contact avec un liquide absorbant (A2, A2') et permet au liquide absorbant d'absorber du dioxyde de carbone contenu dans le gaz, l'absorbeur présentant une première section d'absorption (12a) et une deuxième section d'absorption (12b) qui sont partitionnées et agencées de manière à fournir le gaz dans la deuxième section d'absorption en passant par la première section d'absorption ;
un régénérateur (20) qui régénère le liquide absorbant (A1, A1') grâce à une étape consistant à chauffer le liquide absorbant présentant du dioxyde de carbone absorbé dans l'absorbeur de manière à amener le liquide absorbant à libérer le dioxyde de carbone, le régénérateur présentant une première section de régénération (22a) présentant un dispositif de chauffage externe (25) et une deuxième section de régénération (22b) étant partitionnée par rapport à la première section de régénération et agencée de manière à être chauffée par de la chaleur en provenance du gaz émis par la première section de régénération ;
un mécanisme de circulation comprenant un système de circulation (L1, L2, L2', L7, L7', L8, L9) présentant un trajet de fourniture (L1, L2, L2', L8) permettant de fournir à partir de la deuxième section d'absorption vers la première section de régénération et un trajet retour (L7, L7', L9) permettant un retour à partir de la première section de régénération vers la deuxième section d'absorption de manière à faire circuler le liquide absorbant entre la deuxième section d'absorption et la première section de régénération, et un système d'écoulement ramifié (L3 à L6, L3', L6', L6", L10 à L12) ramifié à partir du trajet de fourniture du système de circulation de manière à amener une partie du liquide absorbant ayant circulé dans le système de circulation à s'écouler à partir de la deuxième section d'absorption à travers la première section d'absorption et la deuxième section de régénération de manière successive et de manière à être réunie au reste du liquide absorbant afin d'être fournie vers la première section de régénération ;
un refroidisseur (15) qui refroidit la partie du liquide absorbant (A2') devant être fournie dans la première section d'absorption au sein du système d'écoulement ramifié ;
un compresseur (40) qui comprime directement un gaz de récupération (C) émis par le régénérateur et contenant du dioxyde de carbone et de la vapeur ; et
un système de récupération de chaleur (41a à 41c) qui récupère de la chaleur du gaz de récupération comprimé par le compresseur et qui fournit la chaleur vers le régénérateur.

2. Appareil de récupération de dioxyde de carbone selon la revendication 1, comprenant en outre :
un séparateur gaz-liquide (43) qui sépare de l'eau condensée issue du gaz de récupération à partir duquel la chaleur est récupérée par le système de récupération de chaleur ; et
un trajet de fourniture d'eau (45) qui fournit l'eau séparée dans le séparateur gaz-liquide vers le liquide absorbant renvoyé de la première section de régénération vers la deuxième section d'absorption au sein du système de circulation.

3. Appareil de récupération de dioxyde de carbone selon la revendication 1 ou 2, dans lequel la deuxième section de régénération ne présente pas de dispositif de chauffage externe.

4. Appareil de récupération de dioxyde de carbone selon l'une quelconque des revendications 1 à 3, dans lequel le système d'écoulement ramifié présente un premier trajet (L3, L3', L8, L10) qui est ramifié à partir du système de circulation de manière à fournir le liquide absorbant à partir de la deuxième section d'absorption vers la première section d'absorption, un deuxième trajet (L4, L11) qui fournit le liquide absorbant à partir de la première section d'absorption vers la deuxième section de régénération, et un troisième trajet (L5, L6, L6', L12) qui s'étend à partir de la deuxième section de régénération de manière à être réuni au système de circulation, et
dans lequel le premier trajet du système d'écoulement ramifié présente le refroidisseur (15).

5. Appareil de récupération de dioxyde de carbone (1 à 3, 5) selon la revendication 4, dans lequel le mécanisme de circulation comprend un premier échangeur de chaleur (29) et un deuxième échangeur de chaleur (30), le premier échangeur de chaleur est agencé de manière à échanger de la chaleur entre le deuxième trajet et le troisième trajet au sein du système d'écoulement ramifié, et le deuxième échangeur de chaleur est agencé de manière à échanger de la chaleur entre le trajet de fourniture et le trajet retour au sein du système de circulation.

6. Appareil de récupération de dioxyde de carbone selon la revendication 5, dans lequel le système de circulation est raccordé au système d'écoulement ramifié de telle manière que le liquide absorbant du trajet de fourniture (L1, L2, L8) au sein du système de circulation est réuni au liquide absorbant du troisième passage (L6, L6', L12) du système d'écoulement ramifié au niveau du côté amont du deuxième échangeur de chaleur.

7. Appareil de récupération de dioxyde de carbone (3) selon la revendication 6, dans lequel le système de circulation présente un réservoir (14') qui est fourni sur le trajet de fourniture de manière à stocker le liquide absorbant devant être fourni à partir de la deuxième section d'absorption vers la première section de régénération au niveau du côté amont du deuxième échangeur de chaleur, et le système de circulation est raccordé au système d'écoulement ramifié de telle manière que, au sein du réservoir, le liquide absorbant du trajet de fourniture est réuni au liquide absorbant du troisième trajet du système d'écoulement ramifié.

8. Appareil de récupération de dioxyde de carbone (4) selon la revendication 4, dans lequel le trajet retour (L7, L7') comprend un premier trajet retour (L7') et un deuxième trajet retour (L7) qui sont ramifiés l'un par rapport à l'autre de manière à renvoyer le liquide absorbant de la première section de régénération vers la deuxième section d'absorption, et le mécanisme de circulation présente un premier échangeur de chaleur (35a) qui échange de la chaleur entre le premier trajet retour du système de circulation et le troisième trajet du système d'écoulement ramifié, un deuxième échangeur de chaleur (30) qui échange de la chaleur entre le trajet de fourniture et le deuxième trajet retour au sein du système de circulation, et un troisième échangeur de chaleur (35b) qui échange de la chaleur entre le premier trajet retour et le deuxième trajet du système d'écoulement ramifié au niveau du côté aval du premier échangeur de chaleur au sein du premier trajet retour du système de circulation.

9. Appareil de récupération de dioxyde de carbone (1 à 3, 5) selon l'une quelconque des revendications 5 à 7, dans lequel le système de récupération de chaleur présente un échangeur de chaleur (41c) qui échange de la chaleur entre le gaz de récupération comprimé par le compresseur et le liquide absorbant entre le premier échangeur de chaleur et la deuxième section de régénération au sein du deuxième trajet du système d'écoulement ramifié, grâce à quoi de la chaleur du gaz de récupération est fournie vers la deuxième section de régénération par l'intermédiaire du liquide absorbant du système d'écoulement ramifié.

10. Appareil de récupération de dioxyde de carbone (4) selon la revendication 8, dans lequel le système de récupération de chaleur présente un échangeur de chaleur (41c) qui échange de la chaleur entre le gaz de récupération comprimé par le compresseur et le liquide absorbant entre le troisième échangeur de chaleur et la deuxième section de régénération au sein du deuxième trajet du système d'écoulement ramifié, grâce à quoi de la chaleur du gaz de récupération est fournie vers la deuxième section de régénération par l'intermédiaire du liquide absorbant du système d'écoulement ramifié.

11. Appareil de récupération de dioxyde de carbone (1 à 5) selon l'une quelconque des revendications 5 à 10, dans lequel le système de récupération de chaleur présente un échangeur de chaleur (41b) qui échange de la chaleur entre le gaz de récupération comprimé par le compresseur et le liquide absorbant entre le deuxième échangeur de chaleur et la première section de régénération au sein du trajet de fourniture du système de circulation, grâce à quoi de la chaleur du gaz de récupération est fournie vers la première section de régénération par l'intermédiaire du liquide absorbant du système de circulation.

12. Appareil de récupération de dioxyde de carbone selon l'une quelconque des revendications 1 à 11, dans lequel le système de récupération de chaleur comprend :
un trajet de circulation (50) qui fait circuler le liquide absorbant entre la première section de régénération et l'extérieur du régénérateur ; et
un échangeur de chaleur (41a) qui échange de la chaleur entre le liquide absorbant du trajet de circulation et le gaz de récupération comprimé par le compresseur, grâce à quoi de la chaleur du gaz de récupération est fournie vers la première section de régénération par l'intermédiaire du liquide absorbant du trajet de circulation.

13. Appareil de récupération de dioxyde de carbone (2) selon l'une quelconque des revendications 1 à 12, dans lequel le système de circulation comprend en outre un trajet d'écoulement (L2') et un échangeur de chaleur (34) qui chauffe une partie du liquide absorbant devant être fourni à partir de la deuxième section d'absorption vers la première section de régénération grâce à une étape consistant à utiliser de la chaleur résiduelle du dispositif de chauffage externe du régénérateur.

14. Appareil de récupération de dioxyde de carbone (5) selon l'une quelconque des revendications 1 à 13, dans lequel l'absorbeur comprend deux colonnes séparées (10A, 10B) vers chacune desquelles sont réparties la première section d'absorption et la deuxième section d'absorption, de manière respective, et le régénérateur comprend deux colonnes (20A, 20B) séparées vers chacune desquelles sont réparties la première section de régénération et la deuxième section de régénération, de manière respective.

15. Procédé de récupération de dioxyde de carbone mis en oeuvre dans un appareil selon la revendication 1, comprenant :
un traitement d'absorption consistant à mettre un gaz en contact avec un liquide absorbant de manière à amener du dioxyde de carbone contenu dans le gaz à être absorbé dans le liquide d'absorption, le traitement d'absorption présentant une première étape d'absorption et une deuxième étape d'absorption, et le gaz étant fourni vers la deuxième étape d'absorption par le biais de la première étape d'absorption ;
un traitement de régénération consistant à chauffer le liquide absorbant dans lequel est absorbé le dioxyde de carbone au cours du traitement d'absorption de manière à émettre le dioxyde de carbone, ce qui régénère le liquide absorbant, le traitement de régénération présentant une première étape de régénération et une deuxième étape de régénération, le liquide absorbant étant chauffé au cours de la première étape de régénération à l'aide d'un dispositif de chauffage externe, et le liquide absorbant étant chauffé au cours de la deuxième étape de régénération à l'aide de chaleur issue du gaz émis au cours de la première étape de régénération ;
un traitement de circulation comprenant une étape de circulation consistant à faire circuler le liquide absorbant entre la deuxième étape d'absorption et la première étape de régénération, et une étape d'écoulement ramifié consistant à amener une partie du liquide absorbant ayant circulé au cours de l'étape de circulation à s'écouler, sous la forme d'un écoulement ramifié, à partir de la deuxième étape d'absorption en passant par la première étape d'absorption et la deuxième étape de régénération de manière successive, pour être réuni au reste du liquide absorbant et être dirigé ensuite vers la première étape de régénération ;
un traitement de refroidissement consistant à refroidir le liquide absorbant de l'écoulement ramifié devant être fourni vers la première étape d'absorption à partir de la deuxième étape d'absorption au cours de l'étape d'écoulement ramifié ;
une étape de compression consistant à comprimer directement un gaz de récupération émis à partir du traitement de régénération et contenant du dioxyde de carbone et de la vapeur ; et
une étape de récupération de chaleur consistant à récupérer de la chaleur du gaz de récupération comprimé à l'étape de compression et à fournir la chaleur au traitement de régénération.
